# EUROPEAN PATENT SPECIFICATION

(11) **EP 3 741 210 B1**
(45) Date of publication and mention of the grant of the patent: **20.04.2022**
(21) Application number: 18901040.8
(22) Date of filing: 25.12.2018
(51) Int. Cl.: A01K 87/04

(54) **FISHING LINE GUIDE AND FISHING ROD EQUIPPED WITH SAME**
ANGELSCHNURFÜHRUNG UND ANGELRUTE DAMIT
GUIDE DE LIGNE DE PÊCHE ET CANNE À PÊCHE QUI EN EST ÉQUIPÉE

(30) Priority: 17.01.2018 JP 2018005465; 28.02.2018 KR 20180024645; 09.08.2018 KR 20180093079
(43) Date of publication of application: 25.11.2020
(60) Divisional application: 22160912.6
(73) Proprietor: Fuji Kogyo Co., Ltd., Shizuoka-shi, Shizuoka 422-8564 (JP)
(72) Inventor: OMURA, Kazuhito, Shizuoka-shi, Shizuoka 422-8564 (JP)
(74) Representative: EIP
(86) International application number: PCT/JP2018/047623
(87) International publication number: WO 2019/142624

(56) References cited:
- WO-A1-2011/102398
- JP-A- 2003 274 809
- JP-A- 2004 081 080
- JP-A- 2012 075 332
- JP-A- 2015 202 055
- JP-A- 2017 046 610
- JP-A- 2017 112 844
- JP-U- S5 894 380
- JP-U- S5 894 380
- KR-U- 19980 058 280

## Description

### TECHNICAL FIELD

The present disclosure relates to a fishing line guide for guiding a fishing line, and to a fishing rod including the same.

### BACKGROUND ART

To guide a fishing line when casting a fishing rig or when landing a fish, a fishing line guide is attached to a tubular rod of a fishing rod. The fishing line guide has: a guide ring through which a fishing line passes; a frame holding and supporting the guide ring; and an attachment portion coupled to the frame and attached to a tubular rod of a fishing rod.

A movable guide or a sliding guide is used in a so-called telescopic fishing rod among fishing rods. The movable guide is fixed to an outer peripheral surface of a tubular rod of a fishing rod through interference fit. The movable guide has an annular attachment portion through which the tubular rod of the fishing rod passes. The movable guide is movable along the tubular rod in the state where the tubular rod passes through the attachment portion. The movable guide is fixed to the tubular rod through interference fit between the attachment portion and the outer peripheral surface of the tubular rod.

By way of example of the movable guide, Japanese Patent Publication No. 4275457 (patent document 1) and Japanese Utility Model Application Publication No. 1995-7726 (patent document 2) disclose a movable guide including an annular attachment portion and a metallic frame. The annular attachment portion is fitted with a tubular rod. The metallic frame has an attachment ring which supports a guide ring and is fitted with the attachment portion. WO2011102398 discloses line guides for a fishing rod having sections formed integrally using a prepreg consisting of high-strength fibers.

### PRIOR ART DOCUMENTS

### Patent Document

Patent document 1: Japanese Patent Publication No. 4275457
Patent document 2: Japanese Utility Model Application Publication No. 1995-7726

### SUMMARY OF THE INVENTION

### Problem to be solved by the Invention

To install a movable guide in a telescopic fishing rod, an annular attachment portion of the movable guide is slid toward a rear end of the fishing rod. The tubular rod of the telescopic fishing rod has a tapering shape whose diameter gradually decreases toward a tip end of the fishing rod. Thus, the attachment portion may be fixed to the outer peripheral surface of the tubular rod at a location where an inner diameter of the attachment portion is equal to an outer diameter of the tubular rod. At this time, if the attachment portion is strongly pushed toward the rear end of the fishing rod, then the attachment portion is slightly deformed and the attachment portion may be fixed with the outer peripheral surface of the tubular rod through interference fit.

When a fishing rig is cast or a fish is landed, various external forces act on the frame coupled to the attachment portion. For example, if an external force is applied to the frame in a transverse direction of the fishing rod, the frame and the attachment portion may be rotated about the tubular rod. In that event, the movable guide loses its function of guiding a fishing line. However, the movable guide, which has the annular attachment portion and the frame coupled to the attachment portion by the attachment ring, does not have a sufficient rotation prevention strength that resists the force applied to the frame in the transverse direction. Therefore, the movable guide tends to be easily rotated about the tubular rod because of an impact carelessly applied to the frame by a user or because of an impact applied to the frame by a rock or a ground surface at a fishing place. The movable guide is not designed so as to have a high rotation prevention strength resisting the rotation about the tubular rod. Further, since the metallic attachment ring protrudes from the frame in the movable guide, the movable guide does not to have a sufficient bending strength, and fails to smoothly untangle the line tangle of the fishing line that occurs in the movable guide.

The telescopic fishing rod may be used for fishing on a waterside, a seashore, a seashore rock, etc. The telescopic fishing rod for seashore rock fishing may have an overall length of 4.5m to 5.5m, and ten to fifteen movable guides may be generally attached to such a telescopic fishing rod. A lightweight fishing rod is advantageous in view of smoothly casting a fishing rig or easily landing a fish. To this end, the telescopic fishing rod requires lightweight movable guides. However, due to the metallic frame having the metallic attachment ring, the movable guide of a prior art does not cope with weight reduction.

Various embodiments according to the present disclosure provide a fishing line guide that solves at least some of the aforementioned problems of the prior art.

### Means for Solving the Problem

According to an embodiment, there is provided a fishing line guide that has a sufficient strength and a light weight by using a resin material having an improved strength. According to an embodiment, there is provided a fishing line guide that has an improved rotation prevention strength for resisting rotation about a tubular rod of a fishing rod.

A fishing line guide according to an embodiment of the present invention, which is attachable to a tubular rod of a fishing rod for guiding a fishing line, includes: an attachment portion having an annular shape; a guide ring through which the fishing line passes; and a ring support that is composed of a metallic thin plate and is partially coupled to the attachment portion and is configured to support the guide ring. The ring support includes: a ring holding portion having a ring holding hole to which the guide ring is coupled; and a ring supporting portion integrally formed with the ring holding portion and partially embedded in the attachment portion at a lower portion of the ring support portion to be coupled to the attachment portion. The attachment portion is formed so as to partially surround the ring supporting portion of the ring support by being insert injection molded from a carbon long fiber reinforced resin material including a carbon long fiber having a length of 5mm to 10mm while using the ring support as an insert in a molding die. An opening is formed in the lower portion of the ring supporting portion which is embedded in the attachment portion, and a portion of the carbon long fiber reinforced resin material composing the attachment portion fills the opening.

According to an embodiment, the carbon long fiber may have 20wt% to 40wt% of a total weight of the carbon long fiber reinforced resin material.

According to an embodiment, the attachment portion may include: an annular body to be fitted with an outer peripheral surface of the tubular rod; and a first rib formed so as to protrude in a radially outward direction in an outer peripheral surface of the annular body.

According to an embodiment, the annular body may include a small outer diameter portion and a large outer diameter portion. The small outer diameter portion is located in a rearward direction toward a butt of the fishing rod, when the fishing line guide is attached to the fishing rod,, and the first rib is formed in the small outer diameter portion. The large outer diameter portion has an outer diameter larger than the small outer diameter portion, and a lower portion of the ring supporting portion is embedded in the large outer diameter portion.

According to an embodiment, the first rib may be formed so as to extend to a rear end surface of the small outer diameter portion in the rearward direction toward the butt of the fishing rod, when the fishing line guide is attached to the fishing rod,.

According to an embodiment, the first rib may have an outer peripheral surface that is formed so as to be inclined from a radially outward leading end of the large outer diameter portion toward a rear end surface of the small outer diameter portion.

According to an embodiment, a longitudinal central line included in the outer peripheral surface of the first rib may form a predetermined angle with a central axis of the fishing rod, when the fishing line guide is attached to the fishing rod,.

According to an embodiment, the first rib may have a width that gradually widens from a rear end of the first rib facing butt of the fishing rod toward a front end of the first rib facing a tip of the fishing rod, when the fishing line guide is attached to the fishing rod,.

According to an embodiment, the attachment portion may further include second and third ribs that are disposed so as to be spaced apart from the first rib in a circumferential direction and are formed so as to protrude in the radially outward direction in the outer peripheral surface of the annular body.

According to an embodiment, a plurality of serrations, which are arranged in a circumferential direction and extend in a direction of a central axis of the fishing rod, when the fishing line guide is attached to the fishing rod, may be formed in an inner peripheral surface of the attachment portion.

According to an embodiment, the plurality of serrations may have a triangular cross section such that a tip is formed at a leading end of the plurality of serrations.

According to an embodiment, the attachment portion may include: a lower attachment portion having a constant thickness along a circumferential direction; and an upper attachment

portion configured such that a thickness of the upper attachment portion increases from both leading ends of the lower attachment portion along the circumferential direction.

A fishing line guide according to a further embodiment of the present disclosure not forming part of the claimed invention, which is attached to a tubular rod of a fishing rod and guides a fishing line, may include: a guide ring through which the fishing line passes; and a guide body supporting the guide ring. The guide body may include: an attachment portion having an annular shape; and a ring support supporting the guide ring. The ring support may include: a ring holding portion having a ring holding hole to which the guide ring is coupled; and a ring supporting portion formed between the attachment portion and the ring holding portion. The guide body may be integrally formed from a carbon long fiber reinforced resin material including a carbon long fiber having a length of 5mm to 10mm.

According to an embodiment, two openings, which are symmetrical with reference to a widthwise central line of the ring support, may be formed in the ring supporting portion.

According to an embodiment, the ring supporting portion may include two reinforcing ribs that protrude from an outer peripheral surface of the attachment portion so as to constitute partial edges of the two openings.

According to an embodiment, the guide body may include a first rib that is formed so as to extend from an upper end of the ring holding portion adjacent to the ring holding hole to a leading end surface of the attachment portion perpendicular to a direction of a central axis of the fishing rod.

According to an embodiment, the attachment portion may include: an annular body fitted with an outer peripheral surface of the tubular rod; and a first rib protruding in a radially outward direction in an outer peripheral surface of the annular body such that a front end of the first rib facing a tip of the fishing rod connects with the ring supporting portion.

According to an embodiment, the first rib may extend to a rear end surface of the annular body in a rearward direction toward the butt of the fishing rod.

According to an embodiment, the first rib may have an outer peripheral surface that is formed so as to be inclined from a radially outward leading end of the ring supporting portion toward the rear end surface of the annular body, and a longitudinal central line included in an outer peripheral surface of the first rib may form a predetermined angle with a central axis of the fishing rod.

According to an embodiment, the attachment portion may include: a lower attachment portion having a constant thickness along a circumferential direction; and an upper attachment portion configured such that a thickness of the upper attachment portion increases from both leading ends of the lower attachment portion along the circumferential direction.

According to an embodiment, an inner peripheral surface of the attachment portion may be composed of a plurality of flat surfaces that are disposed in parallel with a direction of a central axis of the fishing rod.

A fishing rod according to another embodiment of the present disclosure may include: a plurality of tubular rods, and the fishing line guide of any one of the above-described embodiments which is attached to one of the tubular rods.

### Effect of the Invention

According to various embodiments of the present disclosure, since the attachment portion is manufactured by being insert injection molded from a carbon long fiber reinforced resin, the weld strength of the attachment portion can be improved. Further, although pointed tips are formed in the serrations formed in the inner peripheral surface of the attachment portion, the tips do not collapse due to the high strength of the carbon long fiber reinforced resin itself, and a fixing force of the attachment portion for the fishing rod can be reinforced.

### BRIEF DESCRIPTION OF THE DRAWINGS

FIG. 1 shows a telescopic fishing rod in which fishing line guides according to various embodiments of the present disclosure are installed.
FIG. 2A shows a fishing line guide according to a first embodiment of the present disclosure.
FIG. 2B shows the fishing line guide according to the first embodiment of the present disclosure.
FIG. 2C shows the fishing line guide according to the first embodiment of the present disclosure.
FIG. 3A shows a combination of a ring support and a guide ring of the fishing line guide shown in FIGS. 2A to 2C.
FIG. 3B shows the combination of the ring support and the guide ring of the fishing line guide shown in FIGS. 2A to 2C.
FIG. 3C shows the combination of the ring support and the guide ring of the fishing line guide shown in FIGS. 2A to 2C.
FIG. 4A shows a fishing line guide according to a second embodiment of the present disclosure.
FIG. 4B shows the fishing line guide according to the second embodiment of the present disclosure.
FIG. 4C shows the fishing line guide according to the second embodiment of the present disclosure.
FIG. 4D shows the fishing line guide according to the second embodiment of the present disclosure.
FIG. 5A shows a fishing line guide according to a third embodiment of the present disclosure.
FIG. 5B shows the fishing line guide according to the third embodiment of the present disclosure.
FIG. 5C shows the fishing line guide according to the third embodiment of the present disclosure.
FIG. 6 is a table illustrating properties of carbon long fiber reinforced resin that is used for fishing line guides according to various embodiments of the present disclosure.
FIG. 7 is a photograph obtained by photographing a runner portion of a carbon long fiber that is impregnated in the carbon long fiber reinforced resin described in FIG. 6.
FIG. 8 is a photograph obtained by photographing a tip end of the runner portion of the carbon long fiber photographed in FIG. 7 at a magnification of 500 times.
FIG. 9 is a photograph obtained by photographing the tip end of the runner portion of the carbon long fiber fiber photographed in FIG. 7 at a magnification of 2000 times.
FIG. 10 illustrates a process for improving a weld strength when manufacturing a fishing line guide according to the second embodiment of the present disclosure.
FIG. 11A illustrates a process of manufacturing the fishing line guide according to the second embodiment of the present disclosure through a flow analysis.
FIG. 11B illustrates the process of manufacturing the fishing line guide according to the second embodiment of the present disclosure through a flow analysis.
FIG. 11C illustrates the process of manufacturing the fishing line guide according to the second embodiment of the present disclosure through a flow analysis.
FIG. 12 is illustrates the process of manufacturing the fishing line guide according to the second embodiment of the present disclosure through a flow analysis.
FIG. 13 illustrates a process for improving weld strength when manufacturing the fishing line guide according to the first embodiment of the present disclosure.
FIG. 14A illustrates a process of manufacturing the fishing line guide according to the first embodiment of the present disclosure through a flow analysis.
FIG. 14B illustrates the process of manufacturing the fishing line guide according to the first embodiment of the present disclosure through a flow analysis.
FIG. 14C illustrates the process of manufacturing the fishing line guide according to the first embodiment of the present disclosure through a flow analysis.
FIG. 15 illustrates a structure for improving a rotation resistance force, which is provided in the fishing line guide according to the first embodiment of the present disclosure.
FIG. 16 illustrates a material composing the fishing line guide according to the first embodiment of the present disclosure.
FIG. 17 illustrates the properties of the material composing the fishing line guide according to the first embodiment of the present disclosure.
FIG. 18 illustrates an improvement degree of the rotation resistance force when carbon long fiber reinforced resin is used for the fishing line guides according to various embodiments of the present disclosure.

### MODES FOR CARRYING OUT THE INVENTION

Embodiments of the present disclosure are illustrated for the purpose of explaining the technical idea of the present disclosure. The scope of the rights according to the present disclosure is not limited to the embodiments presented below or the detailed descriptions of such embodiments.

All the technical terms and scientific terms in the present disclosure include meanings or definitions that are commonly understood by those of ordinary skill in the art unless otherwise defined. All terms in the present disclosure are selected for the purpose of describing the present disclosure more clearly, and are not selected to limit the scope of the present disclosure.

As used in the present disclosure, expressions such as "comprising", "including", "having", and the like are to be understood as open-ended terms having the possibility of encompassing other embodiments, unless otherwise mentioned in the phrase or sentence containing such expressions.

The singular expressions that are described in the present disclosure may have a plural meaning unless otherwise stated, which will be also applied to the singular expressions recited in the claims.

The expressions, such as "first," "second," etc., which are used in the present disclosure, are used to separate a plurality of elements, and are not intended to limit an order or importance of the elements.

In the present disclosure, the description that one element is "connected," or "coupled" to another element should be understood to indicate that one element may be directly connected, or coupled, to another element, or that one element may be connected, or coupled, to another element via a new element.

The dimensional and numerical values described in the present disclosure are not limited only to the dimensional and numerical values that are described here. Unless specified otherwise, the dimensional and numerical values may be understood to mean the described values and the equivalent ranges including the values. For example, the dimension of "7mm" described in the present disclosure may be understood to include "about 7mm".

The direction indication term "upward, " "upper" or the like used in the present disclosure is based on a direction in which a guide ring is positioned with respect to an attachment portion in the accompanying drawings, while the direction indication term "downward," "lower" or the like means a direction opposite to the upward or upper direction. The fishing line guide shown in the accompanying drawings may be oriented differently, and the direction indication terms may be construed accordingly.

In the coordinate system shown in the drawings of the present disclosure, "TD" denotes a frontward direction and "BD" denotes a rearward direction. Further, "UD" denotes an upward direction and "LD" denotes a downward direction. Further, "WD" denotes a width direction.

As used in the present disclosure, a "TC-model" is a model name indicative of a fishing line guide 1 according to a first embodiment, a "C1-model" is a model name indicative of a fishing line guide 2 according to a second embodiment. Further, a "C2-model" is a model name indicative of a fishing line guide 3 according to a third embodiment, and a "C-model" is a model name indicative of the fishing line guide 2 according to the second embodiment and the fishing line guide 3 according to the third embodiment.

Descriptions are made hereinafter as to the embodiments of the present disclosure with reference to the accompanying drawings. Like reference symbols in the accompanying drawings denote like or corresponding elements. Further, in the following descriptions on the embodiments, duplicate descriptions for the same or corresponding elements may be omitted. However, even if the descriptions of the elements are omitted, such elements are not intended to be excluded in any embodiment.

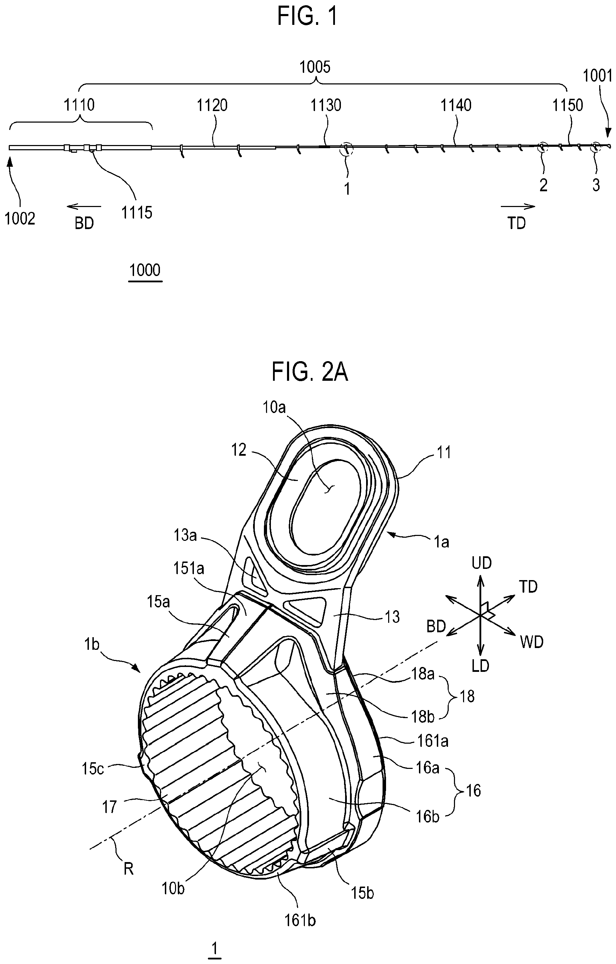

FIG. 1 shows a telescopic fishing rod 1000 in which fishing line guides 1, 2, 3 according to various embodiments of the present disclosure are installed.

An arrow TD indicates a frontward direction toward a tip 1001 of the fishing rod, and an arrow BD indicates a rearward direction toward a butt 1002 of the fishing rod. The fishing rod 1000 shown in FIG. 1 may be referred to as a telescopic fishing rod in the art. The fishing rod 1000 may be used for fishing on a waterside, a seashore, a boat, a seashore rock, or the like, but the places where the fishing rod 1000 may be used are not limited to the aforementioned places.

The fishing rod 1000 includes a long cylindrical rod body 1005. The rod body 1005 may serve as a structure which resists various external forces acting on the fishing rod 1000 and maintains the shape of the fishing rod 1000. The rod body 1005 may include first to fifth tubular rods 1110, 1120, 1130, 1140, 1150. Further, a plurality of tubular rods are coupled to one another in such a telescopic manner that one tubular rod is fitted into another tubular rod located next to said one tubular rod and having an outer diameter greater than that of said one tubular rod, thereby constituting the rod body 1005. FIG. 1 shows the extended rod body 1005 of fishing rod 1000.

The first tubular rod 1110, which is located at a rear end of the fishing rod 1000 among the tubular rods of the rod body 1005, serves as a base rod which a user can grip. A reel seat 1115 is attached to the first tubular rod 1110, and a reel (not shown) for reeling out or winding a fishing line (not shown) may be detachably attached to the reel seat 1115.

The fishing rod 1000 may include a plurality of fishing line guides that are installed to the second to fifth tubular rods 1120, 1130, 1140, 1150. The fishing line guides guide a fishing line which is reeled out from the reel when a fishing rig is cast, or which is wound around the reel when a fish is landed. The fishing line guide according to any one of the disclosed embodiments may be used as the plurality of fishing line guides. One or more fishing line guides 1, 2, 3 according to various embodiments of the present disclosure may be attached to one of the second to fifth tubular rods 1120, 1130, 1140, 1150 of the rod body 1005.

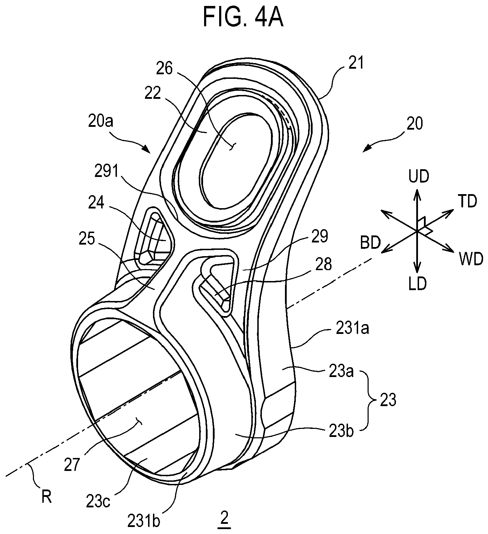

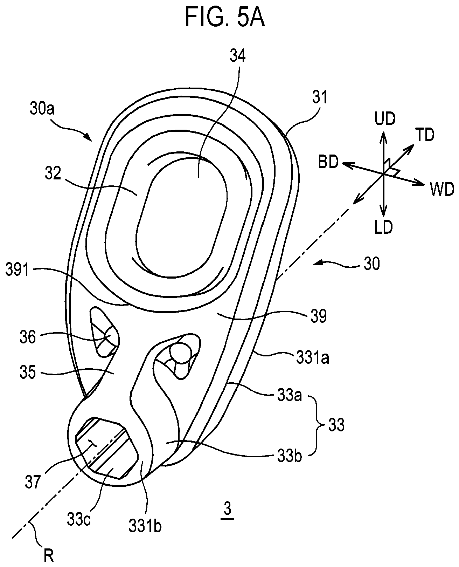

The fishing line guides 1, 2, 3 according to various embodiments of the present disclosure may be attached to the tubular rod having a larger diameter and the tubular rod having a smaller diameter in sequence. The fishing line guide 1 (*see* FIG. 2A) may be attached to the second tubular rod 1120 or the third tubular rod 1130. The fishing line guide 2 (*see* FIG. 4A) may be attached to the fourth tubular rod 1140. The fishing line guide 3 (*see* FIG. 5A) may be attached to the fifth tubular rod 1150.

For example, the third tubular rod 1130 of the rod body 1005 passes through an annular attachment portion of the fishing line guide 1, and therefore the fishing line guide 1 is attached to the rod body 1005. Before the fishing line guide 1 is attached to the rod body 1005, the fishing line guide 1 can be slid in the frontward direction TD or in the rearward direction BD along the rod body 1005 at the attachment portion thereof, and can be rotated about the rod body 1005. The third tubular rod 1130 of the rod body 1005 has a tapering shape whose outer diameter gradually decreases in the frontward direction TD. Accordingly, as the fishing line guide 1 is moved in the rearward direction BD, the attachment portion of the fishing line guide 1 is coupled to an outer peripheral surface of the third tubular rod 1130 through interference fit, and thus the fishing line guide 1 may be attached to the rod body 1005. The fishing line guide according to the embodiments may be referred to as a "movable guide" or a "sliding guide" in the art.

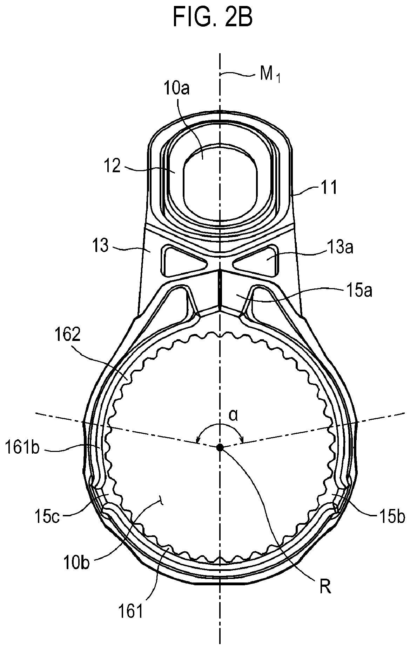

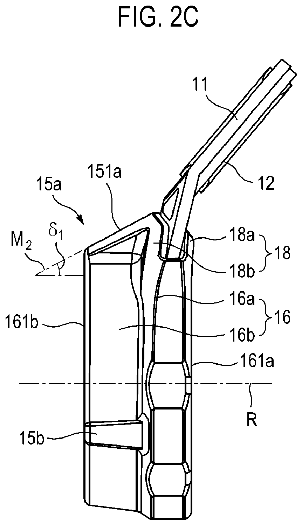

FIGS. 2A to 2C show the fishing line guide 1 according to the first embodiment of the present invention in various directions. FIG. 2A is a perspective view of the fishing line guide 1, FIG. 2B is a front view of the fishing line guide 1, and FIG. 2C is a side view of the fishing line guide 1.

The fishing line guide 1 includes a ring support 1a and an attachment portion 1b coupled to the ring support 1a. The ring support 1a includes a ring holding portion 11 in which a ring holding hole 10a is formed, and a ring supporting portion 13 formed to extend from the ring holding portion 11 downwards. A guide ring 12 is inserted to and fixed to the ring holding hole 10a. The attachment portion 1b is formed so as to surround the ring supporting portion 13 by being insert injection molded from carbon long fiber reinforced resin by using the ring support 1a as an insert. The attachment portion 1b may be installed to be movable along an outer periphery of the fishing rod 1000 shown in FIG. 1.

The attachment portion 1b has an annular shape, and, for example, the third tubular rod 1130 among the tubular rods of the rod body 1005 can pass through the attachment portion 1b. The attachment portion 1b comprises an annular body 16 through which the third tubular rod 1130 can pass. A cylindrical bore 10b, to which the outer peripheral surface of the third tubular rod 1130 is fitted, is perforated through the annular body 16 along a central axis R of the fishing rod. A diameter of the bore 10b may be constant in the frontward direction TD or in the rearward direction BD. In the state where the third tubular rod 1130 passes through the bore 10b, the attachment portion 1b can be slid along the third tubular rod 1130 and can be rotated about the third tubular rod 1130.

The third tubular rod 1130 has a tapering shape that becomes gradually thinner in the frontward direction TD. Accordingly, while the annular body 16 is moved in the rearward direction BD, the annular body 16 can be fitted with the outer peripheral surface of the third tubular rod 1130 at a location where the outer diameter of the third tubular rod 1130 and the diameter of the bore 10b are approximately equal to each other. Then, if the annular body 16 is moved further in the rearward direction BD, the annular body 16 is slightly deformed and, at the same time, the attachment portion 1b can be firmly fitted with and fixed to the third tubular rod 1130.

A plurality of serrations 17, which extend in an axial direction of the bore 10b and protrude toward a central axis R, may be formed in an inner peripheral surface of the annular body 16. Pointed tips may be formed at ends of the plurality of serrations 17. The plurality of serrations 17 can reinforce a fixing force between the rod body 1005 and the annular body 16.

The ring holding hole 10a is perforated through the ring holding portion 11 in a thickness direction of the ring holding portion 11. The ring holding hole 10a may have an elliptical inner peripheral surface in order to correspond to the outer peripheral surface of the guide ring 12. The guide ring 12 may be composed of a ceramic material so as to prevent wear caused by the fishing line. The guide ring 12 is fitted to the inner peripheral surface of the ring holding hole 10a at the outer peripheral surface thereof, and may be coupled to the inner peripheral surface of the ring holding hole 10a through point contact or surface contact. Further, an adhesive for bonding the inner peripheral surface of the ring holding hole 10a and the outer peripheral surface of the guide ring 12 may be applied between the inner peripheral surface of the ring holding hole 10a and the outer peripheral surface of the guide ring 12. The ring holding portion 11 has an approximately annular shape so as to hold the guide ring 12 along the whole circumference of the guide ring 12 by the ring holding hole 10a.

The annular body 16 has a large outer diameter portion 16a and a small outer diameter portion 16b. The large outer diameter portion is located in the frontward direction TD and has a relatively large outer diameter. The small outer diameter portion has an outer diameter smaller than that of the large outer diameter portion 16a and connects with the large outer diameter portion 16a. A radial thickness of the annular body 16 at the large outer diameter portion 16a is greater than a radial thickness of the annular body 16 at the small outer diameter portion 16b. A surface of the large outer diameter portion 16a in the frontward direction TD may define an annular front end surface 161a of the attachment portion 1b, and a surface of the small outer diameter portion 16b in the rearward direction BD may define an annular rear end surface 161b of the attachment portion 1b.

The attachment portion 1b may include a coupling portion 18 that is coupled to the ring support 1a. The coupling portion 18 may be formed at an upper outer peripheral portion of the large outer diameter portion 16a. The coupling portion 18 may include a front coupling portion 18a and a rear coupling portion 18b.

First to third ribs 15a, 15b, 15c may be formed on an outer peripheral surface of the annular body 16. The first rib 15a may be described as a central rib, and the second and third ribs 15b, 15c may be described as lateral ribs. The first rib 15a may be formed between an outer portion of the rear coupling portion 18b and a rear end surface 161b of the small outer diameter portion 16b. The second and third ribs 15b, 15c may be formed on opposed lateral sides of a lower portion of the small outer diameter portion 16b. The first to third ribs 15a, 15b, 15c may have an approximately triangular shape in the frontward direction.

The first rib 15a may be located adjacent to the ring supporting portion 13 and may be located at an upper end of the annular body 16. The first rib 15a is formed throughout the rear coupling portion 18b and the small outer diameter portion 16b. An upper surface 151a of the first rib 15a is inclined toward the central axis R. The first rib 15a may have a shape that tapers in the rearward direction BD toward the butt of the fishing rod. Therefore, the first rib 15a may have a width that gradually widens from the rear end surface 161b in the rearward direction BD along the frontward direction TD facing the tip of the fishing rod. A longitudinal central line M₂ included in the upper surface 151a of the first rib 15a may form a predetermined angle δ₁ with the central axis R of the fishing rod.

The second and third ribs 15b, 15c are located below the center of the annular body 16 at lateral ends of the annular body 16. The second and third ribs 15b, 15c are formed throughout the large outer diameter portion 16a and the small outer diameter portion 16b. A width of the second and third ribs 15b, 15c is narrower than the width of the first rib 15a. Angles between the first rib 15a and the second and third ribs 15b, 15c with respect to the central axis R may be, but is not limited to, about 120°.

Referring to FIG. 2B, the small outer diameter portion 16b may include a lower attachment portion 161 and an upper attachment portion 162. The lower attachment portion 161 has a constant radial thickness along a circumferential direction of the small outer diameter portion. The upper attachment portion 162 is configured such that a radial thickness thereof increases from both leading ends of the lower attachment portion 161 along the circumferential direction. The upper attachment portion 162 may be located at an upper side with reference to the central axis R, and the lower attachment portion 161 may be located at a lower side with reference to the central axis R. The upper attachment portion 162 may be formed so as to connect with the first rib 15a.

The upper attachment portion 162 may have such a shape that the radial thickness becomes gradually thicker from the both leading ends of the lower attachment portion 161 toward the first rib 15a. That is, the radial thickness of a portion of the upper attachment portion 162, which connects with the first rib 15a, may be the largest. An angle α between lines connecting the central axis R and the both leading ends of the lower attachment portion 161 may be equal to or less than 170°. During the insert injection molding, the upper attachment portion 162 reduces the flow velocity of injection material moving toward the central line M₁ and promotes the inflow of a reversing flow, thereby suppressing formation of a weld line. Detailed descriptions related thereto are made below.

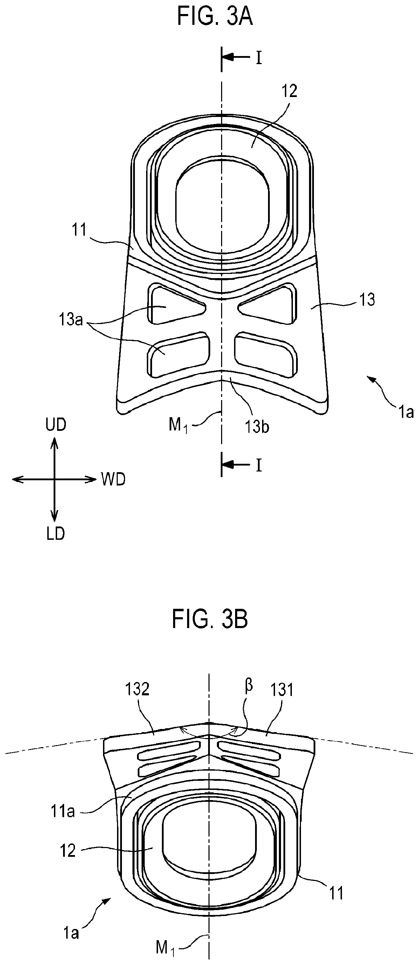

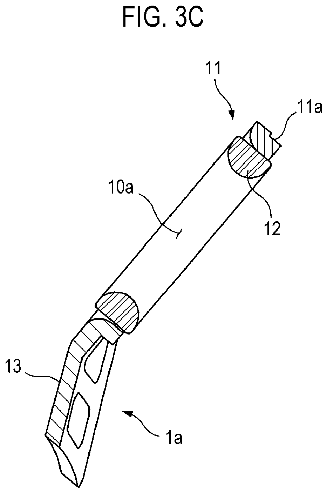

FIGS. 3A to 3C show a combination of the ring support 1a and the guide ring 12, which are shown in FIGS. 2A to 2C, in various directions. FIG. 3A is a front view of the combination of the ring support 1a and the guide ring 12, FIG. 3B is a bottom view of the combination of the ring support 1a and the guide ring, and FIG. 3C is a sectional view of the combination of the ring support 1a and the guide ring 12 which is taken along the line I-I.

The ring support 1a holds the guide ring 12 and supports the guide ring 12 with respect to the attachment portion 1b. The ring support 1a is composed of a thin plate that is made from a metallic material such as stainless steel, stainless alloy, titanium alloy, pure titanium, etc. The ring support 1a is formed as the thin plate in which portions constituting the ring support 1a are bent or curved with respect to one another by a bending portion formed in the ring support. Further, the ring support 1a may be formed by press working (for example, by punching, blanking, or bending) a thin metal sheet that is made of one of the aforementioned metallic materials (such a metal sheet may be referred to as a black in the art).

A plurality of openings 13a are formed in the ring supporting portion 13 by punching. The attachment portion 1b is formed such that the resin material composing the attachment portion 1b fills some of the plurality of openings 13a during the insert injection molding. Accordingly, since a portion of the attachment portion 1b and a portion of the ring supporting portion 13 are configured to cross each other, a fixing force between the ring support 1a and the attachment portion 1b can be reinforced.

A burring portion 11a may be formed in the ring holding portion 11 of the ring support 1a. The burring portion 11a makes the thickness of a portion surrounding the ring holding hole 10a to be thicker than the thickness of the remainder portion of the ring support 1a, thus increasing the contact area between the ring holding portion and the guide ring 12. Thus, a coupling property between the guide ring 12 and the ring holding portion 11 can be improved, and the strength of the ring holding portion 11 itself can be improved.

For example, four openings 13a may be formed in the ring supporting portion 13, and two openings 13a located downwards may be formed to be filled by the coupling portion 18 of the attachment portion 1b during the insert injection molding. A lower end portion 13b of the ring supporting portion 13 may have a shape that is recessed in a V shape toward the ring holding portion 11. Such a structure of the lower end portion 13b of the ring supporting portion 13 may provide the attachment portion 1b with the shape of the cylindrical inner peripheral surface during injection molding the attachment portion 1b.

The ring supporting portion 13 may include first and second ring supporting portions 131, 132 that are formed at either sides with reference to the central line M₁. The first and the second ring supporting portions 131, 132 may be formed to be bent in a V shape with reference to the central line M₁. An angle β formed by the first and second ring supporting portions 131, 132 may be an obtuse angle between 120° and 170°.

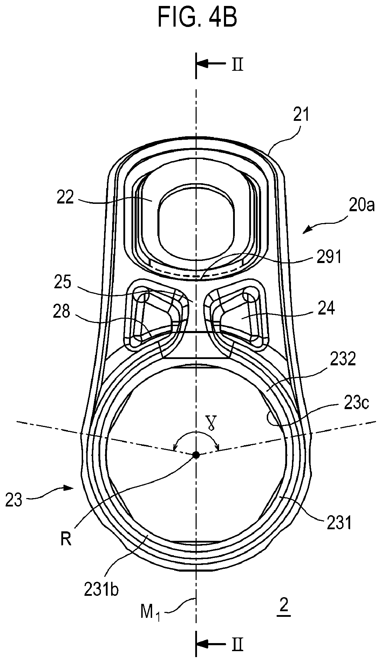

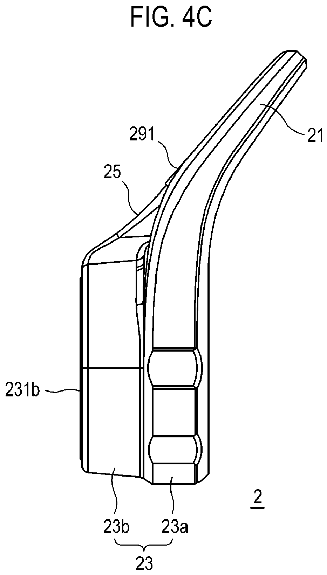

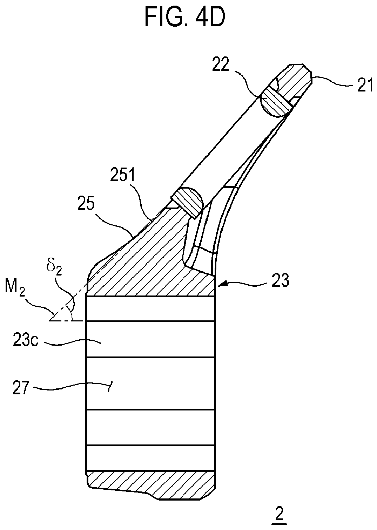

FIGS. 4A to 4D show the fishing line guide 2 according to the second embodiment of the present disclosure not forming part of the claimed invention, in various directions. FIG. 4A is a perspective view of the fishing line guide 2, FIG. 4B is a front view of the fishing line guide 2, FIG. 4C is a side view of the fishing line guide 2, and FIG. 4D is a sectional view of the fishing line guide 2 that is taken along the line II-II.

For example, the fishing line guide 2 may be installed in the fifth tubular rod 1150. The fishing line guide 2 may include a guide ring 22, through which the fishing line passes, and a guide body 20 that supports the guide ring 22. The guide body 20 may be formed integrally by being injection molded form the carbon long fiber reinforced resin material. The guide body 20 may include an attachment portion 23 having an annular shape and a ring support 20a that supports the guide ring 22. The ring support 20a may include a ring holding portion 21 having a ring holding hole 26, to which the guide ring 22 is coupled, and a ring supporting portion 29 formed between the attachment portion 23 and the ring holding portion 21. The guide ring 22 may be inserted to and fixed to the ring holding hole 26. Further, an adhesive for bonding an inner peripheral surface of the ring holding hole 26 and an outer peripheral surface of the guide ring 22 may be applied between the inner peripheral surface of the ring holding hole 26 and the outer peripheral surface of the guide ring 22. The fishing line may pass through the guide ring 22.

The attachment portion 23 may be installed so as to be movable along the outer periphery of the fishing rod. A bore 27 may be formed to be perforated through the attachment portion 23 in the direction of the central axis R of the fishing rod. The fishing rod may pass through the bore 27. The bore 27 may be configured to have a size larger than the ring holding hole 26.

The attachment portion 23 may include a large outer diameter portion 23a formed to extend from the ring supporting portion 29, and a small outer diameter portion 23b formed to extend from the large outer diameter portion 23a in the direction of the central axis R of the fishing rod. A radial thickness of the large outer diameter portion 23a may be thicker than a radial thickness of the small outer diameter portion 23b. A surface of the large outer diameter portion 23a in the frontward direction TD may define an annular front end surface 231a of the attachment portion 23, and a surface of the small outer diameter portion 23b in the rearward direction BD may define an annular rear end surface 231b of the attachment portion 23.

Two openings 24 may be formed in the ring supporting portion 29 between the ring holding portion 21 and the attachment portion 23. The openings 24 may be formed at either sides of the ring supporting portion 29 with reference to the central line M₁.

The guide body 20 may include a first rib 25. The first rib 25 is formed to extend from an upper end 291 of the ring supporting portion 29, which is located adjacent to the ring holding hole 26, to the rear end surface 231b of the attachment portion 23 which is perpendicular to the direction of the central axis R of the fishing rod. The first rib 25 may be formed to be inclined in the direction of the central axis R of the fishing rod. A longitudinal central line M₂ included in an outer peripheral surface 251 of the first rib 25 may form a predetermined angle δ₂ with the central axis R of the fishing rod.

Referring to FIG. 4B, the small outer diameter portion 23b may include a lower attachment portion 231 and an upper attachment portion 232. The lower attachment portion 231 has a constant radial thickness along a circumferential direction of the small outer diameter portion. The upper attachment portion 232 is configured such that a radial thickness thereof increases from both leading ends of the lower attachment portion 231 along the circumferential direction. The upper attachment portion 232 may be located at an upper side with reference to the central axis R, and the lower attachment portion 231 may be located at a lower side with reference to the central axis R. The upper attachment portion 232 may be formed to connect with the first rib 25.

The upper attachment portion 232 may have such a shape that the radial thickness becomes gradually thicker from the both leading ends of the lower attachment portion 231 toward the first rib 25. That is, the radial thickness of a portion of the upper attachment portion 232, which connects with the first rib 25, may be the largest. An angle γ between lines connecting the central axis R and the both leading ends of the lower attachment portion 231 may be equal to or less than 170°. During the injection molding, the upper attachment portion 232 reduces the flow velocity of injection material moving toward the central line M₁ and promotes the inflow of a reversing flow, thereby suppressing the formation of a weld line.

The ring supporting portion 29 may include two reinforcing ribs 28 that protrude from an outer peripheral surface of the large outer diameter portion 23a so as to constitute partial edges of the two openings 24, respectively. The reinforcing ribs 28 may be formed at lower edges of the openings 24 formed in the ring supporting portion 29. The reinforcing ribs 28 may protrude from the large outer diameter portion 23a toward the interiors of the two openings 24, respectively. The reinforcing ribs 28 may be formed along a circumferential direction of the large outer diameter portion 23a. The reinforcing ribs 28 may be formed to be symmetrical to each other with reference to the central line M₁. The reinforcing ribs 28 can increase the flow velocity of the injection material so as to prevent a weld line from being formed in the vicinity of the central line M₁ of the guide body 20 during the injection molding.

Since the guide body 20 is integrally formed from the carbon long fiber reinforced resin, a burring portion may not be formed in the ring support 20a. Further, a serration may not be formed in an inner peripheral surface of the attachment portion 23. To reinforce a coupling property between the attachment portion and the fishing rod, an inner peripheral surface of the attachment portion 23 may be composed of a plurality of flat surfaces 23c. The plurality of flat surfaces 23c may be disposed in parallel with the direction of the central axis R of the fishing rod.

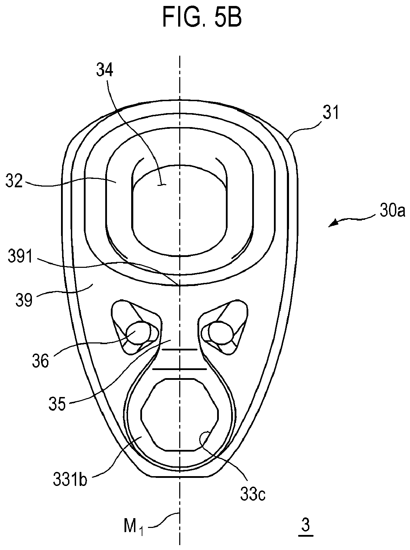

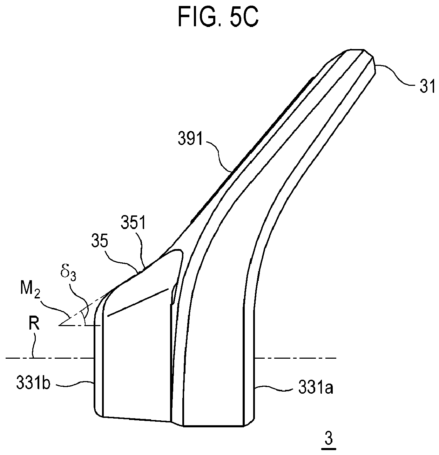

FIGS. 5A to 5C show the fishing line guide 3 according to the third embodiment of the present disclosure not forming part of the claimed invention, in various directions. FIG. 5A is a perspective view of the fishing line guide 3, FIG. 5B is a front view of the fishing line guide 3, and FIG. 5C is a right side view of the fishing line guide 3.

For example, the fishing line guide 3 may be installed in the fifth tubular rod 1150 of the rod body 1005. The fishing line guide 3 may include a guide body 30 and a guide ring 32. The guide body 30 may have such a shape that a width thereof gradually decreases from an upper side to a lower side as a whole. The guide body 30 may be integrally formed by being injection molded from the carbon long fiber reinforced resin.

The guide body 30 may include a ring support 30a and an attachment portion 33. The ring support 30a may include a ring holding portion 31 in which a ring holding hole 34 is formed, and a ring supporting portion 39 formed to extend from the ring holding portion 31. A bore 37 may be formed in the attachment portion 33, and the attachment portion 33 may be installed so as to be movable along an outer periphery of the fishing rod. The fishing rod may pass through the bore 37. The guide ring 32 may be inserted to and fixed to the ring holding hole 34. Further, an adhesive for bonding an inner peripheral surface of the ring holding hole 34 and an outer peripheral surface of the guide ring 32 may be applied between the inner peripheral surface of the ring holding hole 34 and the outer peripheral surface of the guide ring 32.

The bore 37 may be configured to have a size smaller than the ring holding hole 34. The bore 37 may have an approximately hexagonal shape. Among the tubular rods of the fishing rod, the fifth tubular rod 1150 having the smallest diameter may have a hexagonal cross-section so as to correspond to the hexagonal shape of the bore 37.

The attachment portion 33 may include a large outer diameter portion 33a and a small outer diameter portion 33b. The large outer diameter portion 33a is formed to extend from the ring supporting portion 39. The small outer diameter portion 33b is formed to extend from the large outer diameter portion 33a in an axial direction of the bore 37. A radial thickness of the large outer diameter portion 33a may be thicker than a radial thickness of the small outer diameter portion 33b. A surface of the large outer diameter portion 33a in the frontward direction TD may define a front end surface 331a of the attachment portion 33, and a surface of the small outer diameter portion 33b in the rearward direction BD may define a rear end surface 331b of the attachment portion 33.

Two openings 36 may be formed in the ring supporting portion 39 between the ring holding portion 31 and the attachment portion 33. A first rib 35 may be formed between the ring supporting portion 39 and an outer peripheral surface of the attachment portion 33. The first rib 35 may be formed to extend from an upper end 391 of the ring supporting portion 39, which is located adjacent to the ring holding hole 34, to the rear end surface 331b of the attachment portion 33 that is perpendicular to the direction of the central axis R of the fishing rod. The two openings 36 may be formed at either sides of the first rib 35 with reference to the central line M₁. The first rib 35 may be formed to be inclined toward the central axis R of the fishing rod. The longitudinal central line M₂ included in an outer peripheral surface 351 of the first rib 35 may form a predetermined angle δ₃ with the central axis R of the fishing rod.

Since the guide body 30 is integrally formed from the carbon long fiber reinforced resin, a burring portion may not be formed in the ring holding portion 31. Further, a serration may not be formed in an inner peripheral surface of the attachment portion 33. Further, an inner surface of the attachment portion 33 may be composed of a plurality of flat surfaces 33c.

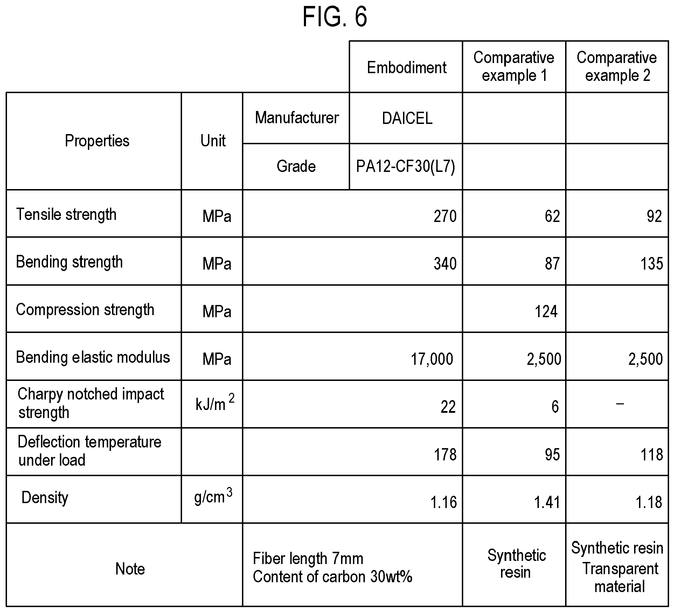

FIG. 6 is a table illustrating properties of the carbon long fiber reinforced resin used for the fishing line guides according to various embodiments of the present disclosure.

The carbon long fiber reinforced resin material has an impact strength that is 3 to 5 times higher than that of a carbon short fiber reinforced resin material. The carbon long fiber reinforced resin material has a high rigidity due to a high fiber-mixed amount, and has an excellent creep property at high temperature. The carbon long fiber reinforced resin material has a high elasticity retention rate at high temperature, and has an excellent impact retention rate at low temperature. The carbon long fiber reinforced resin material has a high dimensional stability due to a small bending deformation, a small tensile deformation and a low linear expansion coefficient, and has an excellent wear resistance. The carbon long fiber may have a length of about 7mm and a cylindrical shape. The content of carbon in the carbon long fiber reinforced resin material may be about 30%. The resin in the carbon long fiber reinforced resin material may be nylon resin.

Referring to FIG. 6, DAICEL is the name of a company that produces a resin material according to an embodiment of the present disclosure. Plastron (a registered trademark, PA12-CF30) is a carbon long fiber reinforced resin material that are produced by DAICEL. Comparative example 1 may be composed of a synthetic resin material, and may be, for example, POM. POM is a kind of engineering plastic, and may be composed of polyoxymethylen. Comparative example 2 may be composed of a synthetic resin material that is different from that of comparative example 1. Comparative example 2 may be characterized in that it is, for example, PA (polyamide) and is a transparent material composed of non-crystalline PA. By way of example, when the attachment portion and/or the guide body is formed from a carbon long fiber reinforced resin material, plastron manufactured by Daicel Chemical Industries, LTD. may be used as the aforesaid carbon long fiber reinforced resin material.

In an embodiment, the attachment portion may be injection molded from a carbon long fiber reinforced resin material that includes a carbon long fiber having a length of 5mm to 10mm. Plastron may include a carbon long fiber having a length of, for example, 7mm. By way of example, plastron may include a carbon long fiber having a length of 9mm. The carbon long fiber having a length of 7mm or 9mm may be impregnated into a synthetic resin material. The content of the carbon long fiber may be 20wt% to 50wt% of a total weight of the carbon long fiber and the synthetic resin material. By way of example, the content of the carbon long fiber may be 30wt% of a total weight of the carbon long fiber and the synthetic resin material. Plastron may satisfy the technical properties that is required by the embodiment according to the present disclosure.

Plastron may be used for the fishing line guides 1, 2, 3 according to various embodiments of the present disclosure. In all properties including tensile strength, bending strength, bending elastic modulus, Charpy notched impact strength, deflection temperature under load, and density, Plastron is superior to the materials of comparative example 1 and comparative example 2. Therefore, the use of plastron can reinforce the strength of the attachment portion.

Plastron may have a high impact property because it is a carbon long fiber reinforced resin. For example, plastron may have an impact strength that is 3 to 5 times higher than that of a short fiber reinforced resin. Further, plastron is a high rigidity material having the content of carbon resin of 30%. Further, plastron may have an excellent creep strength (a phenomenon in which a material continually causes gradual plastic deformation due to a long-term load), and has an excellent creep strength particularly at high temperature. That is, plastron tends not to cause plastic deformation although it is used for a long time or at a high temperature. Further, plastron has an excellent dimensional stability. That is, parts manufactured of plastron has little deflection or bending, and has a low linear expansion coefficient.

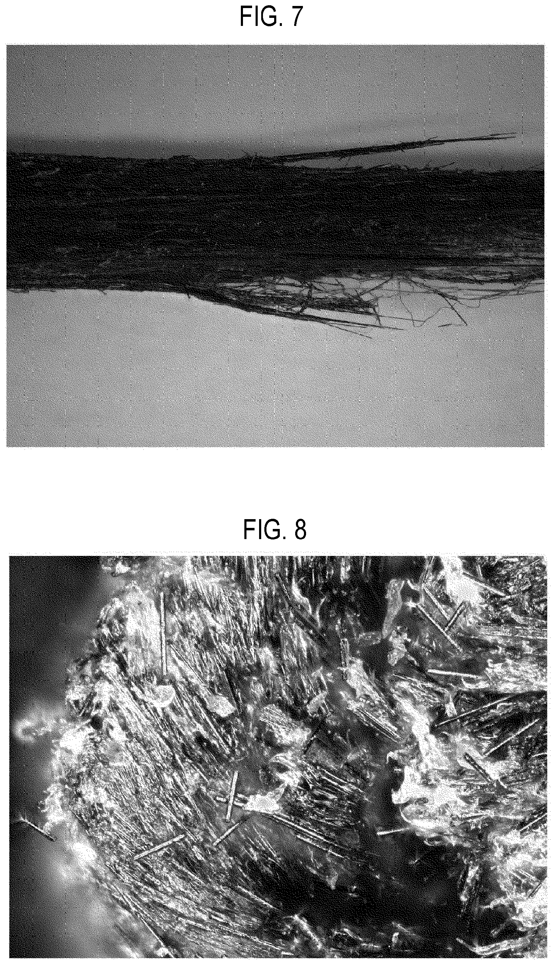

FIG. 7 is a photograph obtained by photographing a runner portion of a carbon long fiber that is impregnated in the resin material described in FIG. 6.

Since the portion photographed in FIG. 7 is a runner portion before being introduced into a product (that is, before being impregnated in the resin), it can be identified that the directions of fibers are arranged in the same direction. That is, the length directions of the carbon long fibers may be arranged in the same direction. To identify the structure of the carbon long fiber, the nylon resin may be removed by burning the carbon long fiber reinforced resin. Further, it can be identified that, in the burned carbon long fiber reinforced resin, the carbon long fibers are tangled in a wire shape according to the shape.

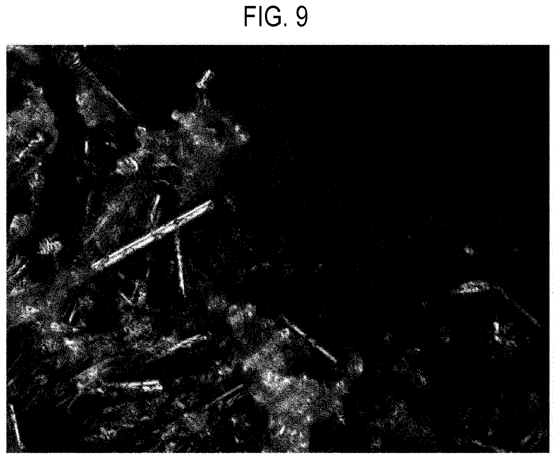

FIG. 8 is a photograph obtained by photographing a tip end of the runner portion of the carbon long fiber photographed in FIG. 7 at a magnification of 500 times. FIG. 9 is a photograph obtained by photographing the tip end of the runner portion of the carbon long fiber fiber photographed in FIG. 7 at a magnification of 2000 times. FIGS. 8 and 9 are photographs obtained by photographing the carbon long fiber with a microscope having a magnification of 2000 times or more.

Referring to FIG. 8, it can be identified that the carbon long fibers have an approximately cylindrical shape. FIG. 9 is a photograph obtained by enlarging a front-facing portion of the cross-section of the fiber in the photograph of FIG. 8. Referring to FIG. 9, it can be identified that the thin fibers are arranged in the form of a bundle.

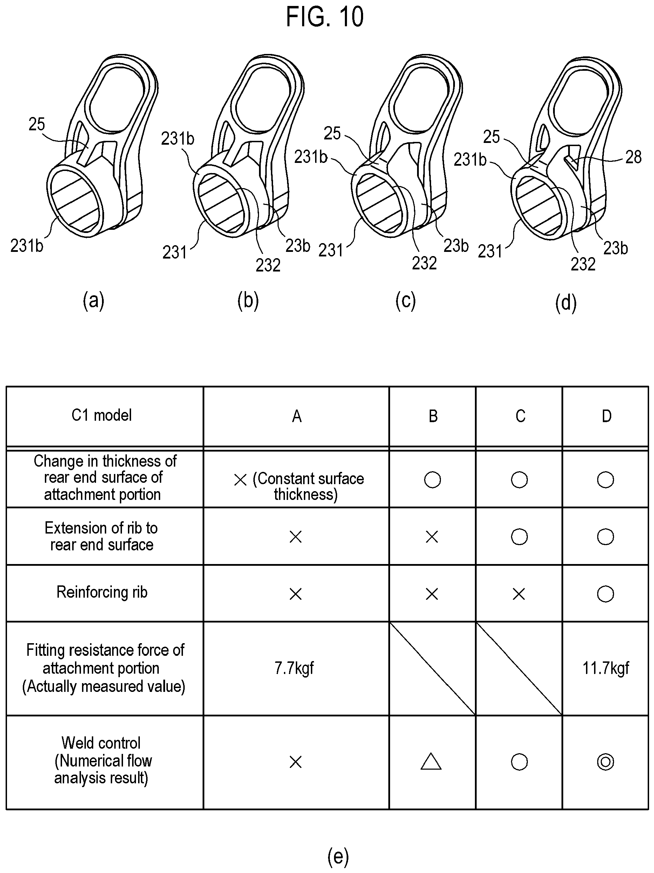

FIG. 10 illustrates a process for improving a weld strength when manufacturing the fishing line guide 2 according to the second embodiment of the present disclosure. FIGS. 10(a) to 10(c) are perspective views showing comparative examples A, B, and C respectively. FIG. 10(d) is a perspective view showing embodiment D according to the present disclosure. FIG. 10(e) is a table for comparing comparative examples A to C, and embodiment D.

To prevent the fishing line guide from being rotated with respect to the fishing rod during fishing, a fishing person can fix the fishing line guide by strongly pushing the fishing line guide to an outer periphery of the fishing rod. When the fishing line guide has such a structure as embodiment D, the strength, which is sufficient to enough to fix the attachment portion of the fishing line guide to the fishing rod, can be secured.

To overcome a low weld strength during injection molding, which may be regarded as a defect of the carbon long fiber reinforced resin, various embodiments of the present disclosure suggest a structure capable of controlling the flow of the carbon long fiber reinforced resin during the injection molding. Embodiment D is an embodiment corresponding to the fishing line guide 2 according to the second embodiment of the present disclosure, while comparative examples A, B, and C are alternatives that have been considered in the course of realizing embodiment D of the present disclosure.

Referring to FIG. 10(a), in comparative example A, a leading end of the first rib 25 fails to extend up to the rear end surface 231b, and may be formed to end approximately in the middle of the attachment portion 23. Further, a thickness of the rear end surface 231b is configured to be constant. Referring to FIG. 10(b), when compared with comparative example A, comparative example B is configured such that the thickness of the rear end surface 231b is not constant. In comparative example B, the small outer diameter portion 23b includes the lower attachment portion 213 and the upper attachment portion 232, and the upper attachment portion 232 is configured such that a radial thickness thereof increases from the both leading ends of the lower attachment portion 231 along a circumferential direction. Referring to FIG. 10(c), when compared with comparative example B, comparative example C is configured such that the first rib 25 extends up to the rear end surface 231b. Referring to FIG. 10(d), when compared with comparative example C, embodiment D is configured such that the reinforcing rib 28 is added to a lower end of the opening 24.

Referring to FIG. 10(e), comparative examples A, B, C and embodiment D are different from one another in terms of the following: (i) the change in the thickness of the rear end surface 231b of the attachment portion; (ii) the extension of the rib 25 up to the rear end surface 231b of the attachment portion; and (iii) the employment of the reinforcing rib 28. Comparative example A does not include all of the configurations (i) to (iii). Comparative example B includes only the configuration (i). Comparative example C includes the configurations (i) and (ii). Embodiment D includes all of the configurations (i) to (iii).

When comparing the fitting resistance forces of the attachment portions in FIG. 10(e), it can be identified that the fitting resistance force of the attachment portion in embodiment D is improved by approximately 52% in comparison with comparative example A. Accordingly, the attachment portion of embodiment D can have the fitting resistance force higher than that of comparative example A by 50% or more. Thus, the damage of the attachment portion can be prevented although the movable guide is strongly fitted with the fishing rod with a fishing person's maximum force. That is, embodiment D can improve the weld strength of the guide body composed of the carbon long fiber reinforced resin.

A numerical flow analysis result shows that the improvement in weld control becomes gradually more excellent from comparative example A toward embodiment D, and detailed description thereof are made below.

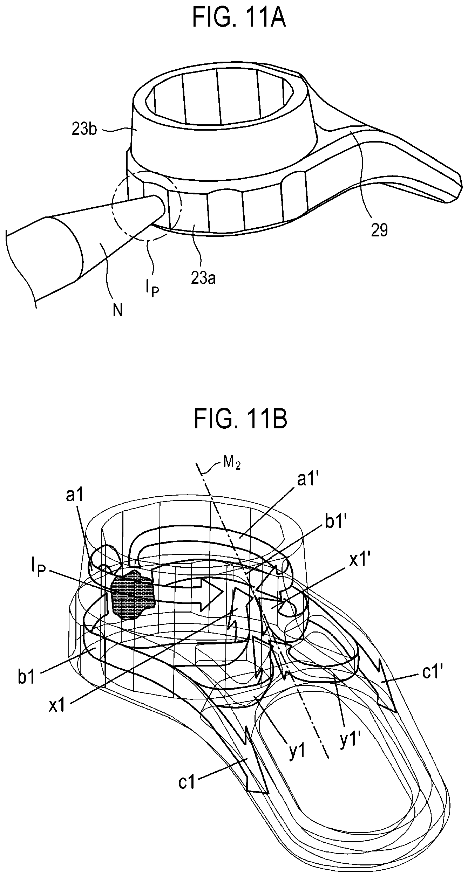

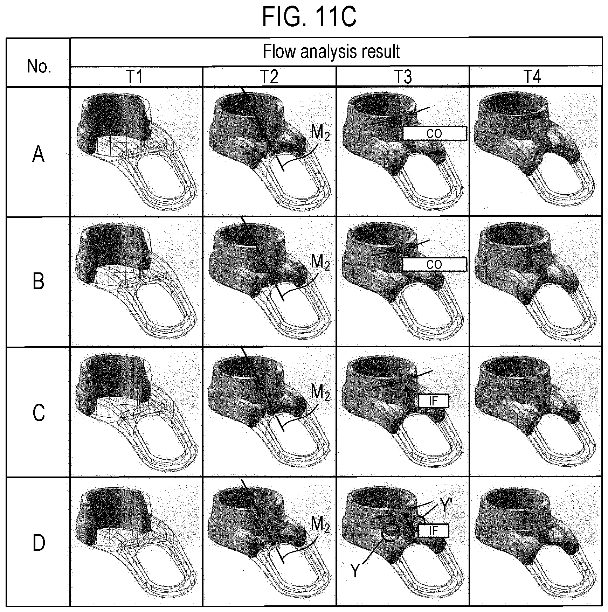

FIGS. 11A to 11C illustrate the process of manufacturing the fishing line guide according to the second embodiment of the present disclosure through a flow analysis. FIG. 11A shows a position at which the injection molding of the resin material starts. FIG. 11B shows the directions of flows progressing in the injection molding process. FIG. 11C shows the progress of the injection molding through a flow analysis result.

Referring to FIG. 11A, a gate position IP, at which the carbon long fiber reinforced resin starts to be injection molded in order to form the attachment portion, may be positioned at a lower end of the attachment portion. The gate position IP means a position at which the molten carbon long fiber reinforced resin is discharged from a nozzle N. Specifically, the gate position IP may be located at a lower end of the large outer diameter portion 23a extending from the ring holding portion. The carbon long fiber reinforced resin, which is injected from the nozzle N in a molten state, may flow through a portion of a molding die corresponding to the large outer diameter portion 23a to a portion of the molding die corresponding to the small outer diameter portion 23b, and then may flow to a portion of the molding die corresponding to the ring supporting portion 29.

Referring to FIG. 11C, comparative examples A to C and embodiment D are the same as comparative examples A to C and embodiment D shown in FIG. 10. The time flow of the injection molding shows a process in which an initial state progresses to a later state while phase T1 progresses to phase T4.

Referring to FIG. 11B, the flow of the carbon long fiber reinforced resin starting from the gate position I_{P} may be divided into a plurality of flows b1, b1', a1, a1', c1, c1' in the molding die. The first and second flows b1, b1' may be defined as a flow that flows from the gate position I_{P} so as to form the large outer diameter portion (an inner circle portion). The third and fourth flows a1, a1' may be defined as a flow that flows from the gate position I_{P} so as to form the small outer diameter portion. The fifth and sixth flows c1, c1' may be defined as a flow that flows so as to form the ring holding portion and the ring supporting portion.

The injection molding of the carbon long fiber reinforced resin progresses in the molding die in the state where the fishing line guide is situated as shown in FIG. 11B. Thus, the third and fourth flows a1, a1' first flow through flow passages in a direction opposite to a gravitational direction, and therefore the considerable loss in flow velocity occurs in the third and fourth flows. Accordingly, the third and fourth flows a1, a1' have a flow velocity considerably slower than the first and second flows b1, b1'.

While the third and fourth flows a1, a1' flow so as to form the small outer diameter portion, a portion corresponding to the upper attachment portion, whose radial thickness gradually increases, may be formed. To manufacture the portion corresponding to the upper attachment portion that has a radial thickness thicker than the lower attachment portion, the width of the channel formed in the molding die becomes wider accordingly. Thus, the flow velocity of the injected material passing through the channel may decrease. As a result, the difference between the flow velocities of the third and fourth flows a1, a1' and the flow velocities of the first and second flows b1, b1' may increase more.

Referring to FIG. 11C, since the flow velocities of the first and second flows b1, b1' are faster than the flow velocities of the third and fourth flows a1, a1', an end portion of the molten injected material may have an inclined shape at phase T1. Thereafter, at phase T2, the first and second flows b1, b1' meet each other first, and combine together in a V shape with reference to a reference line (the longitudinal central line M₂ of the first rib) of the fishing line guide corresponding to the length direction of the first rib. At phase T3, reversing flows x1, x1', y1, y1' are caused to flow along a collision line of the third and fourth flows a1, a1', thus preventing the formation of a weld line. At phase T4, the fifth and sixth flows c1, c1' flow so as to form the ring holding portion.

The first and second flows b1, b1' flow in a circumferential direction along a cylindrical path in the molding die, and thereafter are divided into three flows, respectively. A first-second flow y1 and a second-second flow y1' are a flow that flows so as to form an upper end of the ring supporting portion and an upper end of the first rib. A first-third flow x1 and a second-third flow x1' are a flow that flows so as to form an upper end of the large outer diameter portion and a lower end of the first rib. Fifth and sixth flows c1 and c1' are a flow that flows so as to form the ring holding portion.

The flow velocities of the first-second flow y1,the second-second flow y1', the first-third flow x1, and the second-third flow x1' are faster than those of the third and fourth flows a1, a1'. Thus, they form reversing flows that flow in the directions opposite to the flow directions of the first and second flows b1, b1'. The reversing flows flow from the upper end of the ring supporting portion toward the rear end surface of the small outer diameter portion. That is, the reversing flows can flow from the upper end of the first rib (a position adjacent to the ring holding hole) to the lower end of the first rib (the rear end surface) along the longitudinal central line M₂ (a direction toward the central axis of the fishing rod) of the first rib while forming the first rib. Such reversing flows can prevent the formation of a weld line that is caused due to the collision of the third and fourth flows a1, a1' at 180°.

Referring to FIG. 11C, in comparative example A and comparative example B, the flows of the carbon long fiber reinforced resin may have only two-directional flows flowing along a circumferential direction. Such two-directional flows collide (CO) with each other at 180° and tend to form a weld line. In contrast, in comparative example C and embodiment D, the flows of the carbon long fiber reinforced resin have three-directional flows including reversing flows IF. Thus, the reversing flows IF can improve the weld strength by blocking the collision (CO) of the remaining two-directional flows at 180°. Here, the faster the flows of the reversing flows IF is, the better the formation of a weld line is suppressed.

Since the guide body of embodiment D includes the reinforcing rib, the flows of the first-second flow y1 and the second-second flow y1' are reinforced. Accordingly, embodiment D can suppress the weld line through the reversing flows to a more extent than comparison example C that does not include the reinforcing rib.

To overcome a low weld strength during the injection molding, which may be regarded as a defect of the carbon long fiber reinforced resin, the above-described embodiments can suggest the structure capable of controlling the flows of the carbon long fiber reinforced resin. When a plurality of flows of the resin are formed in the molding die and the respective flow velocities are adjusted to be different, the collision areas of the carbon long fiber reinforced resin are complicatedly entangled and the deterioration of strength caused by the weld line can be eliminated. In contrast, comparative example A or comparative example B fails to induce the formation of the reversing flows. Thus, if two-directional flows collide with each other, then a large weld line is created at the collision area and the deterioration of strength may occur within a relatively wide range. Accordingly, it may be necessary to make various flows of the resin that have different flow velocities by making the third and fourth flows a1, a1' having slow flow velocity, the reversing flows x1, x1', and the reversing flows y1, y1'.

As such, by utilizing the characteristics of the flows of the resin and by optimizing the thickness of the cylindrical portion, the reversing flows can be made in the flows of the carbon resin flowing so as to form the attachment portion, and the weld strength of the section of the attachment portion can be improved.

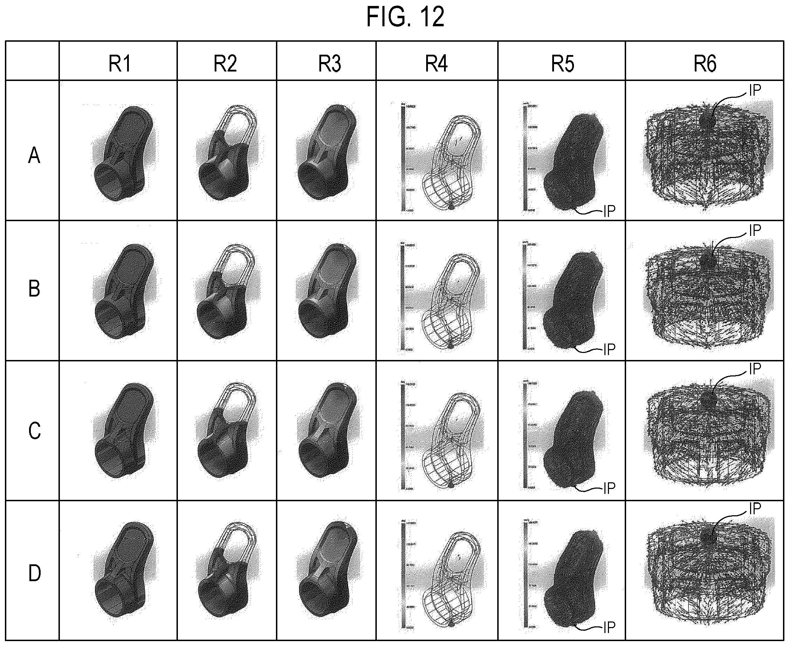

FIG. 12 illustrates a process of manufacturing the fishing line guide 2 according to the second embodiment of the present disclosure through a flow analysis.

Referring to column R1 of FIG. 12, comparative examples A to C and embodiment D are the same as comparative examples A to C and embodiment D shown in FIG. 10. Referring to column R2 of FIG. 12, as shown in FIGS. 11B and 11C, the formation of a weld line in the ring supporting portion and the first rib can be prevented through the reversing flows. Referring to column R3 of FIG. 12, the weld line may be formed at an upper end of the ring holding portion. But, the guide ring is inserted to the ring holding hole of the ring holding portion and an adhesive may be applied. Thus, the adhesive is bridged on the weld line, and the damage of the ring holding portion can be fundamentally prevented. Column R4 of FIG. 12 shows the frames of the movable guides according to comparative examples A to C and embodiment D that are shown in column R1 of FIG. 12. In column R5 and column R6 of FIG. 12, the gate position IP at which the carbon long fiber reinforced resin is injected from the nozzle can be identified. Further, the directions of the flows of the carbon long fiber reinforced resin, which flow while forming the attachment portion, can be identified from column R5 and column R6 of FIG. 12.

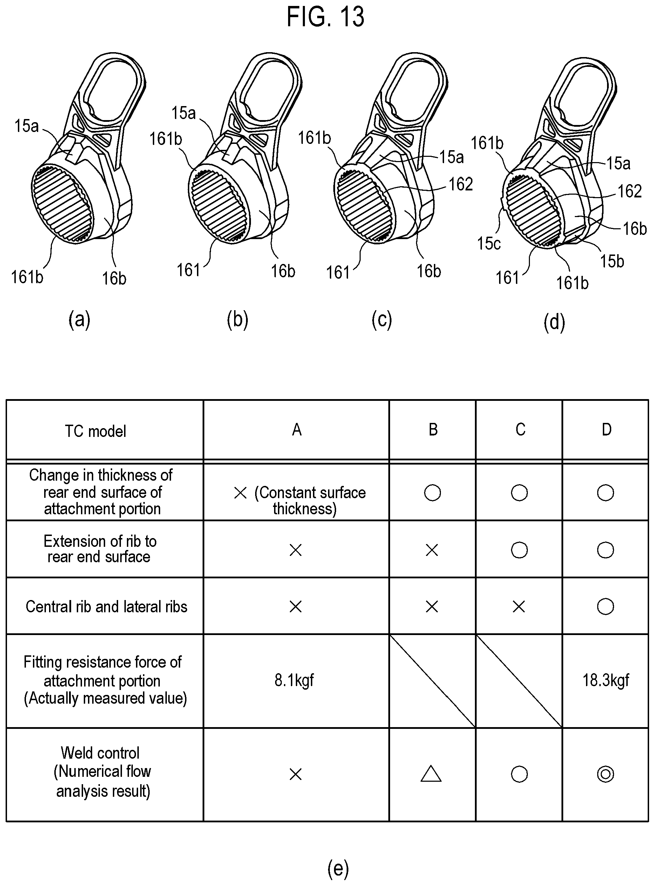

FIG. 13 illustrates a process for improving weld strength when manufacturing the fishing line guide 1 according to the first embodiment of the present disclosure. FIGS. 13(a) to 13(c) are perspective views showing comparative examples A, B and C, respectively. FIG. 13(d) is a perspective view showing embodiment D according to the present disclosure. FIG. 13(e) is a table for comparing comparative examples A to C, and embodiment D.

Referring to FIG. 13(a), in comparative example A, a leading end of the first rib 15a fails to extend up to the rear end surface 161b of the attachment portion, and may be formed to end approximately in the middle along the axial direction in the outer peripheral surface of the small outer diameter portion 16b. Further, a thickness of the rear end surface 161b is configured to be constant. Referring to FIG. 13(b), when compared with comparative example A, comparative example B is configured such that the thickness of the rear end surface 161b is not constant. In comparative example B, the small outer diameter portion 16b includes the lower attachment portion 161 and the upper attachment portion 162, and the upper attachment portion 162 is configured such that the radial thickness thereof increases from the both leading ends of the lower attachment portion 161 along a circumferential direction. Referring to FIG. 13(c), when compared with comparative example B, comparative example C is configured such that the first rib 15a extends up to the rear end surface 161b. Referring to FIG. 13(d), when compared with comparative example C, embodiment D is configured such that the first to third ribs 15a, 15b, 15c are formed.

Embodiment D is an embodiment corresponding to the fishing line guide 1 according to the first embodiment of the present disclosure, and comparative examples A, B, and C are alternatives that have been considered in the course of realizing embodiment D. Comparative examples A, B, C and embodiment D are different from one another in terms of the following: (i) the change in the thickness of the rear end surface of the attachment portion; (ii) the extension of the rib 15a up to the rear end surface of the attachment portion; and (iii) the employment of the central rib and the lateral ribs 15a, 15b, 15c. Comparative example A does not include all of the configurations (i) to (iii). Comparative example B includes only the configuration (i). Comparative example C includes the configurations (i) and (ii). Embodiment D includes all of the configurations (i) to (iii).

When comparting the fitting resistance forces of the attachment portions, it can be identified that embodiment D is improved by approximately 126% in comparison with comparative example A. Accordingly, the attachment portion of embodiment D can have the fitting resistance force higher than that of comparative example A by 126% or more. Thus, the damage of the attachment portion can be prevented although the movable guide is strongly fitted with the fishing rod with a fishing person's maximum force. That is, the weld strength of the carbon long fiber reinforced resin can be improved through embodiment D.

A numerical flow analysis result show that the improvement becomes gradually more excellent from comparative example A toward embodiment D, and detailed descriptions thereof are made below.

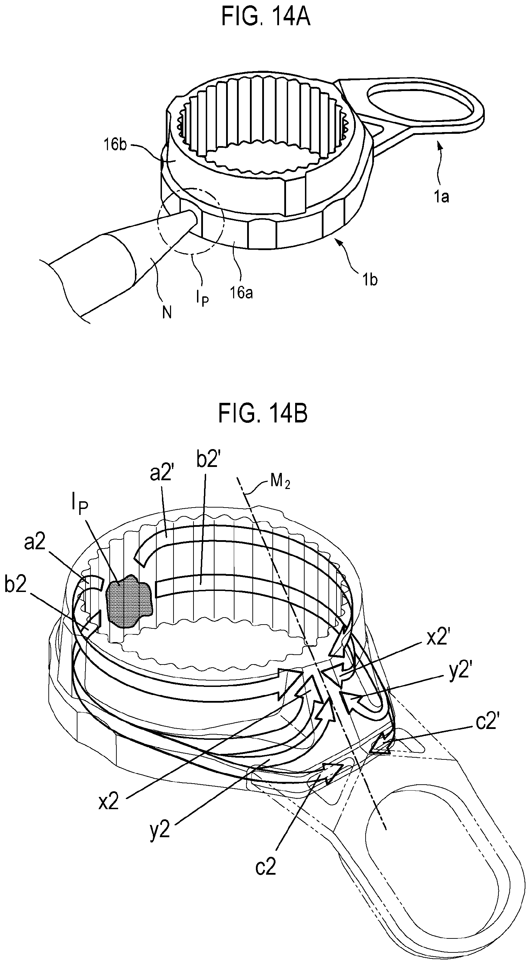

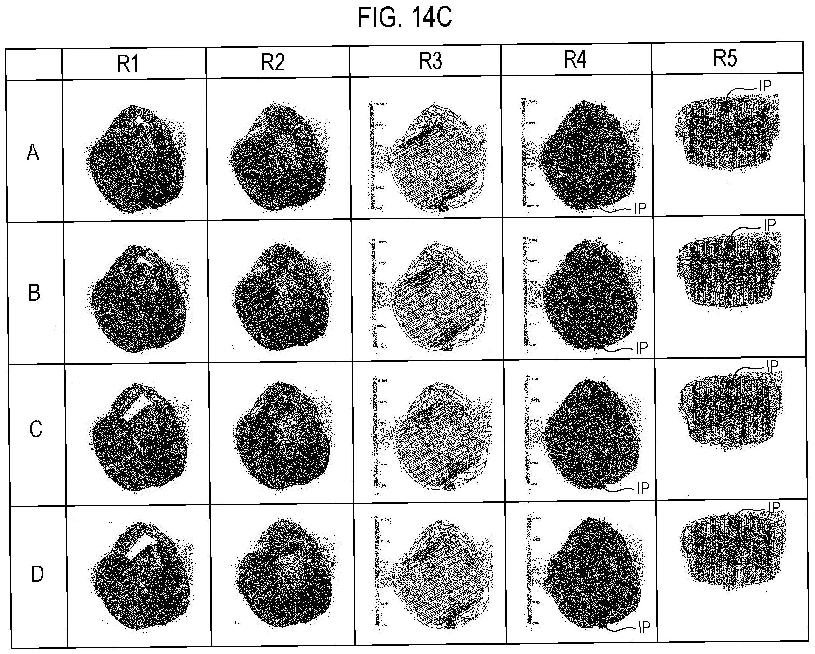

FIGS. 14A to 14C illustrate the process of manufacturing the fishing line guide 1 according to the first embodiment of the present disclosure through a flow analysis. In the fishing line guide 1 according to the first embodiment, only a portion corresponding to the attachment portion is manufactured from a carbon long fiber reinforced resin. FIG. 14A shows a position at which the injection molding of the resin material starts. FIG. 14B shows the directions of flows progressing in the injection molding process. FIG. 14C shows a flow analysis result in the process of manufacturing the fishing line guide 1 according to the first embodiment of the present disclosure.

Referring to FIG. 14A, to form the attachment portion 1b, the gate position IP may be positioned at a lower end of the large outer diameter portion 16a. The carbon long fiber reinforced resin injected from the nozzle N in a molten state may flow through a portion of a molding die corresponding to the large outer diameter portion 16a to a portion of the molding die corresponding to the small outer diameter portion 16b, and then may flow to a portion of the molding die corresponding to the coupling portion 18.

Referring to FIG. 14B, the flows of the carbon long fiber reinforced resin starting from the gate position I_{P} may be divided into a plurality of flows b2, b2', a2, a2', c2, c2' in the molding die. The first and second flows b2, b2' may be defined as a flow that flows from the gate position IP so as to form the large outer diameter portion (an inner circle portion). The third and fourth flows a2, a2' may be defined as a flow that flows from the gate position I_{P} so as to form the small outer diameter portion. The fifth and sixth flows c2, c2' may be defined as a flow that flows so as to form the front coupling portion.

The injection molding of the carbon long fiber reinforced resin progresses in the molding die in the state where the fishing line guide is situated as shown in FIG. 14B. Thus, the third and fourth flows a2, a2' first flow through flow passages in a direction opposite to a gravitational direction, and therefore the considerable loss in flow velocity occurs in the third and fourth flows. Accordingly, the third and fourth flows a2, a2' have a flow velocity considerably slower than the first and second flows b2, b2'.

While the third and fourth flows a2, a2' flow so as to form the small outer diameter portion, a portion corresponding to the upper attachment portion, whose radial thickness gradually increases, may be formed. To manufacture the portion corresponding to the upper attachment portion that has a radial thickness thicker than the lower attachment portion, the width of the channel formed in the molding die becomes wider accordingly. Thus, the flow velocity of the injected material passing through the channel may decrease. As a result, the difference between the flow velocities of the third and fourth flows a2, a2' and the flow velocities of the first and second flows b2, b2' may increase more.

The first and second flows b2, b2' flow in a circumferential direction along a cylindrical path in the molding die, and thereafter are divided into three flows, respectively. The first-second flow y2 and the second-second flow y2' are a flow that flows so as to form an upper end of the coupling portion and an upper end of the first rib. The first-third flow x2 and the second-third flow x2' are a flow that flows so as to form an upper end of the large outer diameter portion and a lower end of the first rib.

The flow velocities of the first-second flow y2, the second-second flow y2', the first-third flow x2, and the second-third flow x2' are faster than those of the third and fourth flows a2, a2'. Thus, they form reversing flows that flow in the directions opposite to the flow directions of the first and second flows b2, and b2'. The reversing flows flow from the upper end of the coupling portion toward the rear end surface of the small outer diameter portion. That is, the reversing flows can flow from the upper end of the first rib (a position adjacent to the ring holding hole) to the lower end of the first rib (the rear end surface) along the longitudinal central line M₂ (a direction toward the central axis of the fishing rod) of the first rib while forming the first rib. Such reversing flows can prevent the formation of a weld line that is caused due to the collision of the third and fourth flows a2, a2' at 180°.

Referring to FIG. 14C, in comparative example A and comparative example B, the flows of the carbon long fiber reinforced resin may have only two-directional flows flowing along a circumferential direction. Such two directional flows collide with each other at 180° and tend to form a weld line. In contrast, in comparative example C and embodiment D, the flows of the carbon long fiber reinforced resin have three-directional flows including the reversing flows. Thus, the reversing flows can improve the weld strength by blocking the collision of the remaining two-directional flows at 180°. Here, the faster the flows of the reversing flows is, the better the formation of a weld line is suppressed.

Referring to FIG. 14C, comparative examples Ato C and embodiment D are the same as comparative examples A to C and embodiment D shown in FIG. 13. Column R3 of FIG. 14C shows the frames of the movable guides according to comparative examples A to C and embodiment D that are shown in column R1 of FIG. 14. In column R4 and column R5 of FIG. 14C, the gate position I_{P} at which the carbon long fiber reinforced resin is injected from the nozzle can be identified. Further, the direction of the flows of the carbon long fiber reinforced resin, which flow while forming the attachment portion, can be identified from column R4 and column R5 of FIG. 14C. Referring to column R2 of FIG. 14C, in embodiment D, the formation of the reversing flows can be maximized by forming the first rib such that the first rib extends up to an end of the small outer diameter portion, and by making the thickness of the upper attachment portion thicker than the thickness of the lower attachment portion. Accordingly, in embodiment D, the formation of a weld line can be suppressed in the attachment portion, and the weld strength can be improved.

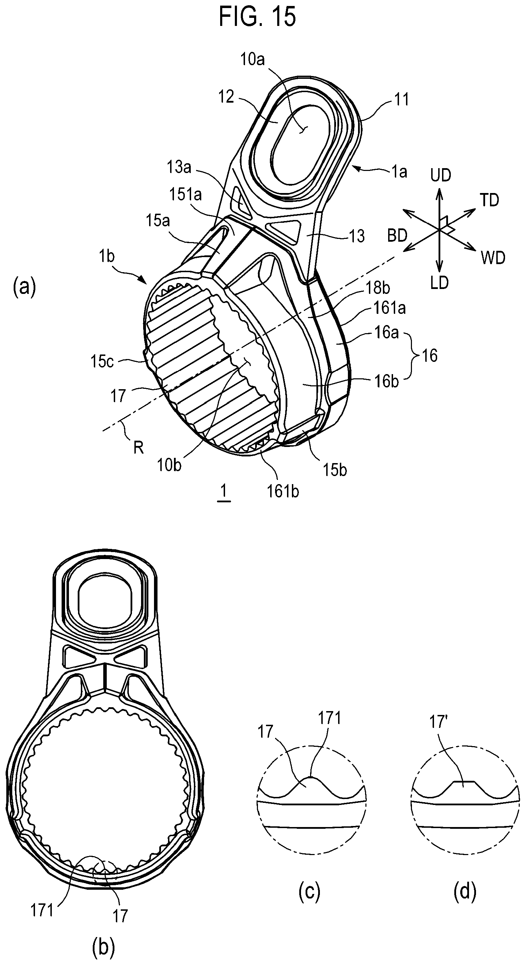

FIG. 15 illustrates a structure for improving a rotation resistance force, which is provided in the fishing line guide 1 according to the first embodiment of the present disclosure. FIG. 15(a) shows a perspective view of the fishing line guide 1. FIG. 15(b) shows a front view of the fishing line guide 1. FIG. 15(d) shows serrations 17' according to a comparative example. FIG. 15(c) shows serrations 17' according to an embodiment.

If the fishing line guide is rotated with respect to the fishing rod during fishing, it may hinder the normal progress of fishing. Further, the rotation of the fishing line guide may cause damage to the fishing rod or the line tangle of a fishing line. Therefore, even when a person having a weak strength such as a child or a woman installs the movable guide in the fishing rod, it is necessary to provide the movable guide with a structure that can give a sufficient rotation resistance force.

Referring to FIG. 15(b), to improve the rotation resistance force in the fishing line guide, a plurality of serrations 17 with tips 171 may be formed in the inner peripheral surface of the attachment portion. That is, a knurling shape may be employed in the inner peripheral surface of the attachment portion.

Referring to FIG. 15(c), when the material of the attachment portion includes a carbon long fiber reinforced resin, the strength can be remarkably improved and thus the buckling of the tips of the serrations can be prevented. That is, it is possible to prevent the knurled tip ends from buckling. Therefore, even when the user strongly fits the attachment portion with the fishing rod, the tips of the serrations do not collapse. Thus, the pointed shapes of the tips are maintained and the rotation resistance force of the attachment portion with respect to the fishing rod can be improved.

Referring to FIG. 15(d), in the comparative example, the material of the attachment portion may include a polyoxymethylen (POM) resin. In this case, if the fishing line guide is fitted with the fishing rod, then the tips of the triangular serrations may buckle, and, as shown in FIG. 15(b), the serrations 17', whose tips collapse flat, may be formed. If the tips collapse flat as described above, then the rotation resistance force of the attachment portion may decrease. That is, if the user strongly fits the attachment portion with the fishing rod, there may occur the phenomenon that the tips collapse flat like the serrations 17'.

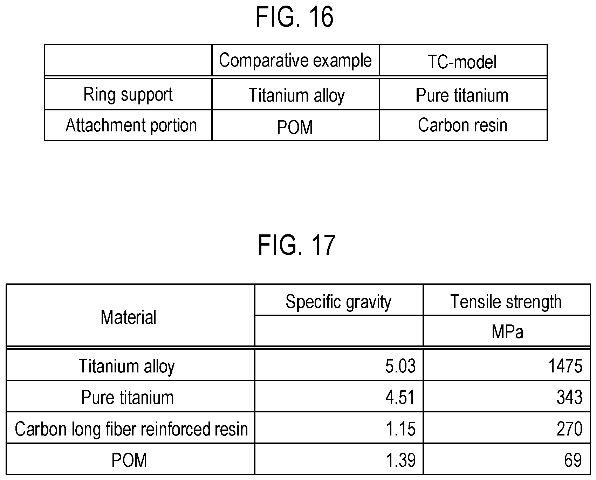

FIG. 16 illustrates the material composing the fishing line guide 1 according to the first embodiment of the present disclosure. FIG. 17 illustrates the properties of the material composing the fishing line guide 1 according to the first embodiment of the present disclosure.

Referring to FIG. 16, titanium alloy may be used for a metallic frame constituting the ring support of the comparative example, and pure titanium may be used for a metallic frame constituting the ring support of a TC-model that is the fishing line guide 1 according to the first embodiment. Further, POM may be used for the attachment portion of the comparative example, and carbon long fiber reinforced resin may be used for the attachment portion of the TC-model.

Referring to FIGS. 6 and 17, it can be identified that the specific gravity of the carbon long fiber reinforced resin is lowest in comparison with other materials, and it can be identified that the tensile strength of the carbon long fiber reinforced resin is approximately 3.9 times of the tensile strength of POM. Further, referring to FIG. 6, it can be identified that the bending strength of the carbon long fiber reinforced resin is approximately 3.5 times of the bending strength of POM. In the embodiments of the present disclosure, the attachment portion is formed from a carbon long fiber reinforced resin. Thus, although the user fits the attachment portion with the fishing rod with a strong force, the serrations formed in the inner peripheral surface of the attachment portion do not buckle and the shapes of the serrations can be maintained.

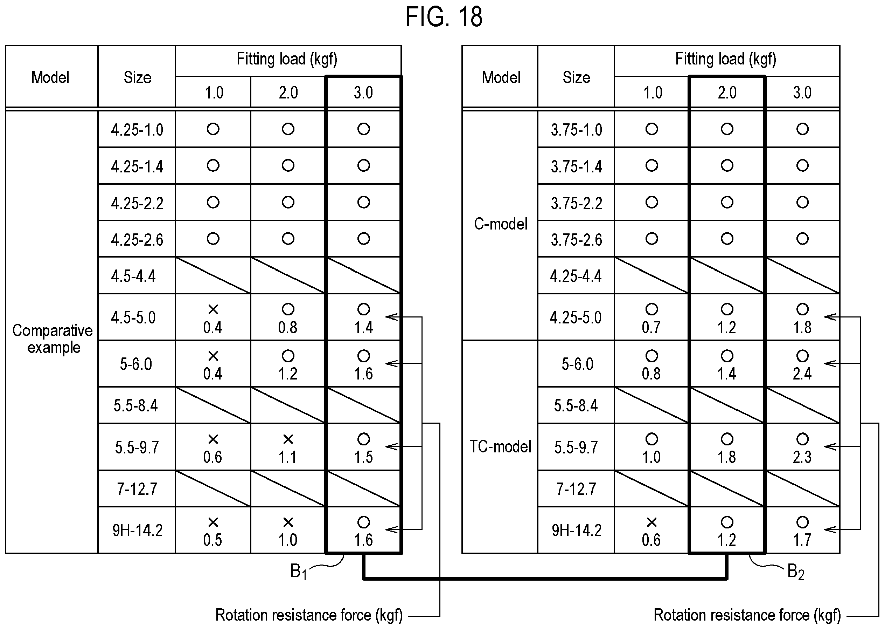

FIG. 18 illustrates an improvement degree of the rotation resistance force when carbon long fiber reinforced resin is used for a fishing line guide according to the first embodiment of the present disclosure.

The fishing line guides 1, 2, 3 according to various embodiments of the present disclosure are fitted with and attached to an evaluation fishing rod, wherein the evaluation fishing rod is ATTENDER (a trademark name, a type of a fishing rod) 1.5-53 (a detailed model name). As an evaluation method, with the assumption of excessive hooking, the fishing rod is caused to be bent transversely at 90° (under a load of 2.5kgf to 3.0kgf) by continuously 100 times as if a rotation load is applied transversely at 90° to the fishing line guide with respect to the fishing rod. Thereby, it is checked whether or not the fishing line guide is rotated with respect to the fishing rod.

FIG. 18 shows, by each size of the fishing line guides, evaluation results for whether or not the fishing line guides fitted under indicated fitting loads are rotated. Here, an area marked by 'O' shows a case where the fishing line guide was attached to the fishing rod with the relevant fitting load and the rotation prevention succeeded, and an area marked by 'X' shows a case where the rotation prevention failed. In FIG. 18, there are cells where a numerical value of the rotation resistance force for a specific fishing line guide is written together with the mark of 'O' or 'X'. For example, referring to a row for the 4.5-5.0 size in the comparative example, the rotation resistance force of 0.4 with the mark 'X' shows that the rotation prevention failed, and the rotation resistance force of 0.8 with the mark 'O' shows that the rotation prevention succeeded.

For example, it is expected, in the case of the 4.5-5.0 size in the comparative example, that the rotation prevention fails when the rotation resistance force is 0.4kgf under the fitting load of 1.0kgf, and that the rotation prevention succeeds when the rotation resistance force is 0.8kgf under the fitting load of 2.Okgf. As another example, it is expected, in the case of the 9H-14.2 size in the TC-model, that the rotation prevention fails when the rotation resistance force is 0.6kgf under the fitting load of 1.0kgf, and that the rotation prevention succeeds when the rotation resistance force is 1.2kgf under the fitting load of 2.Okgf.

Referring to areas B₁ and B₂ of FIG. 18, both of the areas B₁ and B₂ show that the rotation prevention succeed. When the fitting load close to approximately 2.0kgf is applied to the fishing line guides of most of sizes according to various embodiments of the present disclosure, it is possible to prevent the rotation of the fishing line guide with respect to the fishing rod.

POM has a low material strength. Thus, when the fishing line guide is fitted with the fishing rod, the knurled tip ends collapse and buckle. In contrast, since carbon long fiber reinforced resin has a high material strength, the knurled tip ends do not collapse, and the knurled tip ends can bite the painted surface of the fishing rod to generate a spike effect. Accordingly, in the hooking operation of the fishing rod, the rotation resistance force of the attachment portion of the fishing line guide can be improved.

### DESCRIPTION OF REFERENCE SYMBOLS

1, 2, 3 fishing line guide, 20, 30 guide body, 1a, 20a, 30a ring support, 11, 21, 31 ring holding portion, 12, 22, 32 guide ring, 13, 29, 39 ring supporting portion, 1b, 23, 33 attachment portion, 10b, 27, 37 bore, 15a, 25, 35 first rib, 15b second rib, 15c third rib, 1b, 23, 33 attachment portion, 17 serration

## Claims

1. A fishing line guide which is attachable to a tubular rod (1130) of a fishing rod (1000) for guiding a fishing line, the fishing line guide comprising:
an attachment portion (1b) having an annular shape;
a guide ring (12) through which the fishing line is intended to pass; and
a ring support (1a) composed of a metallic thin plate, the ring support being partially coupled to the attachment portion (1b) and configured to support the guide ring (12), wherein
the ring support (1a) includes:
a ring holding portion (11) having a ring holding hole (10a) to which the guide ring (12) is coupled;
**characterized in that**
a ring supporting portion (13) is integrally formed with the ring holding portion and partially embedded in the attachment portion at a lower portion of the ring support portion to be coupled to the attachment portion;
the attachment portion (1b) is formed so as to partially surround the ring supporting portion (13) of the ring support (1a) by being insert injection molded from a carbon long fiber reinforced resin material including a carbon long fiber having a length of 5mm to 10mm while using the ring support (1a) as an insert in a molding die; and
a plurality of openings (13a) are formed in the lower portion of the ring supporting portion (13) which is embedded in the attachment portion, wherein some of the plurality of openings 13a are filled by the carbon long fiber reinforced resin material composing the attachment portion (1b).

2. The fishing line guide of claim 1, wherein the carbon long fiber has 20wt% to 40wt% of a total weight of the carbon long fiber reinforced resin material.

3. The fishing line guide of claim 1, wherein the attachment portion (1b) includes:
an annular body (16) to be fitted with an outer peripheral surface of the tubular rod (1130); and
a first rib (15a) formed so as to protrude in an radially outward direction in an outer peripheral surface of the annular body.

4. The fishing line guide of claim 3, wherein the annular body (16) includes:
a small outer diameter portion (16b) located in a rearward direction toward a butt of the fishing rod (1000), when the fishing line guide is attached to the fishing rod, wherein the first rib (15a) is formed in the small outer diameter portion; and
a large outer diameter portion (16a) having an outer diameter larger than the small outer diameter portion, wherein the lower portion of the ring supporting portion (13) is embedded in the large outer diameter portion.

5. The fishing line guide of claim 4, wherein the first rib (15a) is formed so as to extend to a rear end surface (161b) of the small outer diameter portion (16b) in the rearward direction toward the butt of the fishing rod (1000), when the fishing line guide is attached to the fishing rod.

6. The fishing line guide of claim 4, wherein the first rib (15a) has an outer peripheral surface (151a) that is formed so as to be inclined from a radially outward leading end of the large outer diameter portion (16a) toward a rear end surface (161b) of the small outer diameter portion (16b).

7. The fishing line guide of claim 6, wherein a longitudinal central line (M₂) included in the outer peripheral surface (151a) of the first rib (15a) forms a predetermined angle (δ₁) with a central axis (R) of the fishing rod (1000), when the fishing line guide is attached to the fishing rod.

8. The fishing line guide of claim 3, wherein the first rib (15a) has a width that gradually widens from a rear end of the first rib (15a) facing a butt of the fishing rod (1000) toward a front end of the first rib facing a tip of the fishing rod, when the fishing line guide is attached to the fishing rod.

9. The fishing line guide of claim 3, wherein the attachment portion (1b) further includes second and third ribs (15b, 15c) that are disposed so as to be spaced apart from the first rib (15a) in a circumferential direction and are formed so as to protrude in the radially outward direction in the outer peripheral surface of the annular body (16).

10. The fishing line guide of claim 1, wherein a plurality of serrations (17) are formed in an inner peripheral surface of the attachment portion (1b), the plurality of serrations being arranged in a circumferential direction and extending in a direction of a central axis (R) of the fishing rod (1000), when the fishing line guide is attached to the fishing rod.

11. The fishing line guide of claim 10, wherein the plurality of serrations (17) have a triangular cross section such that a tip (171) is formed at a leading end of the plurality of serrations.

12. The fishing line guide of claim 1, wherein the attachment portion (1b) includes:
a lower attachment portion (161) having a constant thickness along a circumferential direction; and
an upper attachment portion (162) configured such that a thickness of the upper attachment portion increases from both leading ends of the lower attachment portion along the circumferential direction.

13. A fishing rod comprising:
a plurality of tubular rods (1110, 1120, 1130, 1140, 1150);
and
the fishing line guide (1) of any one of claims 1 to 12, which is attached to one of the tubular rods.

## Patentansprüche

1. Angelschnurführung, die an einer rohrförmigen Rute (1130) einer Angelrute (1000) zum Führen einer Angelschnur befestigt werden kann, wobei die Angelschnurführung Folgendes umfasst:
einen Befestigungsabschnitt (1b), der eine ringförmige Form aufweist;
einen Führungsring (12), durch den die Angelschnur passieren soll, und
einen Ringträger (1a), der aus einer metallischen dünnen Platte zusammengesetzt ist, wobei der Ringträger teilweise mit dem Befestigungsabschnitt (1b) gekoppelt und konfiguriert ist, um den Führungsring (12) zu tragen, wobei der Ringträger (1a) Folgendes einschließt:
einen Ringhalteabschnitt (11), der ein Ringhalteloch (10a) aufweist, mit dem der Führungsring (12) gekoppelt ist; **dadurch gekennzeichnet, dass** ein Ringtrageabschnitt (13) mit dem Ringhalteabschnitt einstückig ausgebildet und teilweise in den Befestigungsabschnitt an einem unteren Abschnitt des Ringtrageabschnitts eingebettet ist, um mit dem Befestigungsabschnitt gekoppelt zu werden;
der Befestigungsabschnitt (1b) ausgebildet ist, um den Ringtrageabschnitt (13) des Ringträgers (1a) teilweise zu umgeben, indem er aus einem mit Kohlenstofflangfasern verstärkten Harzmaterial spritzeingegossen wird, das eine Kohlenstofflangfaser einschließt, die eine Länge von 5 mm bis 10 mm aufweist, während der Ringträger (1a) als ein Einsatz in einem Formwerkzeug verwendet wird; und
mehrere Öffnungen (13a) in dem unteren Abschnitt des Ringtrageabschnitts (13) ausgebildet sind, der in den Befestigungsabschnitt eingebettet ist, wobei einige der mehreren Öffnungen 13a durch das mit Kohlenstofflangfasern verstärkte Harzmaterial gefüllt sind, das den Befestigungsabschnitt (1b) zusammensetzt.

2. Angelschnurführung nach Anspruch 1, wobei die Kohlenstofflangfaser 20 Gew.-% bis 40 Gew.-% eines Gesamtgewichts des mit Kohlenstofflangfasern verstärkten Harzmaterials aufweist.

3. Angelschnurführung nach Anspruch 1, wobei der Befestigungsabschnitt (1b) Folgendes einschließt:
einen ringförmigen Körper (16), um an einer äußeren Umfangsoberfläche der rohrförmigen Rute (1130) montiert zu sein; und
eine erste Rippe (15a), die ausgebildet ist, um in einer radial nach außen gerichteten Richtung in einer äußeren Umfangsoberfläche des ringförmigen Körpers vorzustehen.

4. Angelschnurführung nach Anspruch 3, wobei der ringförmige Körper (16) Folgendes einschließt:
einen Abschnitt (16b) mit geringem Außendurchmesser, der sich in einer rückwärtigen Richtung zu einem hinteren Teil der Angelrute (1000) befindet, wenn die Angelschnurführung an der Angelrute befestigt ist, wobei die erste Rippe (15a) in dem Abschnitt mit geringem Außendurchmesser ausgebildet ist; und
einen Abschnitt (16a) mit großem Außendurchmesser, der einen Außendurchmesser aufweist, der größer als der Abschnitt mit geringem Außendurchmesser ist, wobei der untere Abschnitt des Ringtrageabschnitts (13) in den Abschnitt mit großem Außendurchmesser eingebettet ist.

5. Angelschnurführung nach Anspruch 4, wobei die erste Rippe (15a) ausgebildet ist, um sich zu einer hinteren Endoberfläche (161b) des Abschnitts (16b) mit geringerem Außendurchmesser in der rückwärtigen Richtung zu dem hinteren Teil der Angelrute (1000) zu erstrecken, wenn die Angelschnurführung an der Angelrute befestigt ist.

6. Angelschnurführung nach Anspruch 4, wobei die erste Rippe (15a) eine äußere Umfangsoberfläche (151a) aufweist, die ausgebildet ist, um von einem radial nach außen gerichteten vorderen Ende des Abschnitts (16a) mit großem Außendurchmesser zu einer hinteren Endoberfläche (161b) des Abschnitts (16b) mit geringem Außendurchmesser hin geneigt zu sein.

7. Angelschnurführung nach Anspruch 6, wobei eine Längsmittellinie (M2), die in der äußeren Umfangsoberfläche (151a) der ersten Rippe (15a) eingeschlossen ist, einen zuvor bestimmten Winkel (δ₁) mit einer Mittelachse (R) der Angelrute (1000) ausbildet, wenn die Angelschnurführung an der Angelrute befestigt ist.

8. Angelschnurführung nach Anspruch 3, wobei die erste Rippe (15a) eine Breite aufweist, die sich allmählich von einem hinteren Ende der ersten Rippe (15a), das einem hinteren Teil der Angelrute (1000) zugewandt ist, zu einem vorderen Ende der ersten Rippe erweitert, das einer Spitze der Angelrute zugewandt ist, wenn die Angelschnurführung an der Angelrute befestigt ist.

9. Angelschnurführung nach Anspruch 3, wobei der Befestigungsabschnitt (1b) ferner zweite und dritte Rippen (15b, 15c) einschließt, die angeordnet sind, um von der ersten Rippe (15a) in Umfangsrichtung beabstandet zu sein und ausgebildet sind, um in der radial nach außen gerichteten Richtung in die äußere Umfangsoberfläche des ringförmigen Körpers (16) vorzustehen.

10. Angelschnurführung nach Anspruch 1, wobei mehrere Verzahnungen (17) in einer inneren Umfangsoberfläche des Befestigungsabschnitts (1b) ausgebildet sind, wobei die mehreren Verzahnungen in einer Umfangsrichtung angeordnet sind und sich in einer Richtung einer Mittelachse (R) der Angelrute (1000) erstrecken, wenn die Angelschnurführung an der Angelrute befestigt ist.

11. Angelschnurführung nach Anspruch 10, wobei die mehreren Verzahnungen (17) einen dreieckigen Querschnitt derart aufweisen, dass eine Spitze (171) an einem vorderen Ende der mehreren Verzahnungen ausgebildet ist.

12. Angelschnurführung nach Anspruch 1, wobei der Befestigungsabschnitt (1b) Folgendes einschließt:
einen unteren Befestigungsabschnitt (161), der eine konstante Dicke entlang einer Umfangsrichtung aufweist; und
einen oberen Befestigungsabschnitt (162), der derart konfiguriert ist, dass eine Dicke des oberen Befestigungsabschnitts von beiden vorderen Enden des unteren Befestigungsabschnitts entlang der Umfangsrichtung zunimmt.

13. Angelrute, die Folgendes umfasst:
mehrere rohrförmige Ruten (1110, 1120, 1130, 1140, 1150); und
die Angelschnurführung (1) nach einem der Ansprüche 1 bis 12, die an einer der rohrförmigen Ruten befestigt ist.

## Revendications

1. Guide de ligne de pêche qui peut être fixé à une tige tubulaire (1130) d'une canne à pêche (1000) pour guider une ligne de pêche, le guide de ligne de pêche comprenant :
une partie de fixation (1b) de forme annulaire ;
un anneau de guidage (12) à travers lequel la ligne de pêche est destinée à passer, et
un support d'anneau (1a) composé d'une plaque mince métallique, le support d'anneau étant partiellement accouplé à la partie de fixation (1b) et conçu pour supporter l'anneau de guidage (12), dans lequel le support d'anneau (1a) comporte :
une partie de maintien d'anneau (11) ayant un trou de maintien d'anneau (10a) auquel l'anneau de guidage (12) est accouplé ; **caractérisé en ce qu'**une partie de support d'anneau (13) est formée intégralement avec la partie de maintien d'anneau et est partiellement encastrée dans la partie de fixation au niveau d'une partie inférieure de la partie de support d'anneau à accoupler à la partie de fixation ;
la partie de fixation (1b) est formée de manière à entourer partiellement la partie de support d'anneau (13) du support d'anneau (1a) en étant moulée par injection par insertion à partir d'un matériau en résine renforcée de fibres longues de carbone comportant une fibre longue de carbone ayant une longueur de 5 mm à 10 mm à l'aide du support d'anneau (1a) comme insert dans une matrice de moulage ; et
une pluralité d'ouvertures (13a) sont formées dans la partie inférieure de la partie de support d'anneau (13) qui est encastrée dans la partie de fixation, certaines de la pluralité d'ouvertures (13a) étant remplies par le matériau en résine renforcée de fibres longues de carbone composant la partie de fixation (1b).

2. Guide de ligne de pêche selon la revendication 1, dans lequel la fibre longue de carbone a de 20 % en poids à 40 % en poids d'un poids total du matériau de résine renforcée de fibres longues de carbone.

3. Guide-ligne de pêche selon la revendication 1, dans lequel la partie de fixation (1b) comporte :
un corps annulaire (16) à équiper d'une surface périphérique extérieure de la tige tubulaire (1130) ; et
une première nervure (15a) formée de manière à faire saillie dans une direction radialement vers l'extérieur dans une surface périphérique extérieure du corps annulaire.

4. Guide-ligne de pêche selon la revendication 3, dans lequel le corps annulaire (16) comporte :
une partie de petit diamètre extérieur (16b) située dans une direction vers l'arrière vers un talon de la canne à pêche (1000), lorsque le guide de ligne de pêche est fixé à la canne à pêche, la première nervure (15a) étant formée dans la partie de petit diamètre extérieur ; et
une partie de grand diamètre extérieur (16a) ayant un diamètre extérieur supérieur à la partie de petit diamètre extérieur, la partie inférieure de la partie de support d'anneau (13) étant encastrée dans la partie de grand diamètre extérieur.

5. Guide de ligne de pêche selon la revendication 4, dans lequel la première nervure (15a) est formée de manière à s'étendre jusqu'à une surface d'extrémité arrière (161b) de la partie de petit diamètre extérieur (16b) dans la direction arrière vers le talon de la canne à pêche (1000), lorsque le guide de ligne de pêche est fixé à la canne à pêche.

6. Guide de ligne de pêche selon la revendication 4, dans lequel la première nervure (15a) a une surface périphérique externe (151a) qui est formée de manière à être inclinée depuis une extrémité avant radialement vers l'extérieur de la partie de grand diamètre externe (16a) vers une surface d'extrémité arrière (161b) de la partie de petit diamètre extérieur (16b).

7. Guide-ligne de pêche selon la revendication 6, dans lequel une ligne centrale longitudinale (M2) incluse dans la surface périphérique externe (151a) de la première nervure (15a) forme un angle prédéterminé (δ₁) avec un axe central (R) de la canne à pêche (1000), lorsque le guide de ligne de pêche est fixé à la canne à pêche.

8. Guide de ligne de pêche selon la revendication 3, dans lequel la première nervure (15a) a une largeur qui s'élargit progressivement à partir d'une extrémité arrière de la première nervure (15a) faisant face à un talon de la canne à pêche (1000) vers une extrémité avant de la première nervure faisant face à une pointe de la canne à pêche, lorsque le guide de ligne de pêche est fixé à la canne à pêche.

9. Guide de ligne de pêche selon la revendication 3, dans lequel la partie de fixation (1b) comporte en outre des deuxième et troisième nervures (15b, 15c) qui sont disposées de manière à être espacées de la première nervure (15a) dans une direction circonférentielle et sont formées de manière à faire saillie dans la direction radialement vers l'extérieur dans la surface périphérique externe du corps annulaire (16).

10. Guide de ligne de pêche selon la revendication 1, dans lequel une pluralité de dentelures (17) sont formées dans une surface périphérique intérieure de la partie de fixation (1b), la pluralité de dentelures étant agencées dans une direction circonférentielle et s'étendant dans une direction d'un axe central (R) de la canne à pêche (1000), lorsque le guide de ligne de pêche est fixé à la canne à pêche.

11. Guide de ligne de pêche selon la revendication 10, dans lequel la pluralité de dentelures (17) ont une section transversale triangulaire de telle sorte qu'une pointe (171) est formée à une extrémité avant de la pluralité de dentelures.

12. Guide-ligne de pêche selon la revendication 1, dans lequel la partie de fixation (1b) comporte :
une partie de fixation inférieure (161) ayant une épaisseur constante le long d'une direction circonférentielle ; et
une partie de fixation supérieure (162) conçue de telle sorte qu'une épaisseur de la partie de fixation supérieure augmente à partir des deux extrémités avant de la partie de fixation inférieure le long de la direction circonférentielle.

13. Canne à pêche comprenant:
une pluralité de tiges tubulaires (1110, 1120, 1130, 1140, 1150) ; et
le guide-ligne de pêche (1) selon l'une quelconque des revendications 1 à 12, qui est fixé à l'une des tiges tubulaires.
